(19) Europäisches Patentamt / European Patent Office / Office européen des brevets

(11) **EP 4 674 555 A1**

(12) **EUROPEAN PATENT APPLICATION**
published in accordance with Art. 153(4) EPC

(43) Date of publication:
07.01.2026 Bulletin 2026/02

(21) Application number: 24778797.1

(22) Date of filing: 15.02.2024

(51) International Patent Classification (IPC):
*B23K 9/12* (2006.01)   *B23K 9/02* (2006.01)
*B23K 9/23* (2006.01)   *B23K 35/30* (2006.01)

(52) Cooperative Patent Classification (CPC):
**B23K 9/02; B23K 9/12; B23K 9/23; B23K 35/30**

(86) International application number:
**PCT/JP2024/005287**

(87) International publication number:
**WO 2024/202652 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 31.03.2023 JP 2023059087

(71) Applicant: **KABUSHIKI KAISHA KOBE SEIKO SHO (KOBE STEEL, LTD.)**
**Hyogo 651-8585 (JP)**

(72) Inventors:
• YAMAZAKI, Kei
  JP)
• KITAMURA, Yoshiaki
  JP)

(74) Representative: **Müller-Boré & Partner**
**Patentanwälte PartG mbB**
**Friedenheimer Brücke 21**
**80639 München (DE)**

(54) **FILLET WELDING METHOD, FEEDING CONTROL METHOD, POWER SUPPLY, AND FILLET WELDING SYSTEM**

(57)    Excellent robustness is achieved even when a feeding control welding method is applied to fillet welding. In a feeding control method for alternately switching a feeding speed between a forward feeding period and a reverse feeding period and applied to fillet welding, when a wire position phase based on a position of a welding wire at the time of switching from the reverse feeding period to the forward feeding period is set to 0 deg, an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

FIG. 6

EP 4 674 555 A1

**Description**

TECHNICAL FIELD

The present invention relates to a fillet welding method, a feeding control method, a power supply, and a fillet welding system.

BACKGROUND ART

The fillet welding is one of construction methods used in gas-shielded arc welding, and examples thereof include a case in which thin steel sheets are overlapped and welded (Hereinafter, also referred to as "lap fillet welding".) and a case in which the steel sheets are orthogonal to a T shape and welded, and the fillet welding is applied to various types of industry. In the fillet welding, a target position of welding is shifted or a gap is generated between the steel sheets due to factors such as a fixing accuracy of the steel sheet, a processability accuracy of the steel sheet, an assembly accuracy, and a distortion during welding. Depending on the shift of the target position and the existence of the gap, there have been problems such as poor cross-linking property and poor bead shape that cause burn-through into the gap in the related art.

In order to solve the above-described problems, for example, Patent Literature 1 discloses a wire for mag-welding of a thin steel sheet containing, in terms of mass %, C: 0.04% to 0.15%, Si: 0.75% to 1.00%, Mn: 1.00% to 2.00%, and Cr: 0.35% to 0.80%, and having a remainder being Fe and inevitable impurities.

In addition, Patent Literature 2 discloses a gas-shielded arc welding method in which, in gas-shielded arc welding of a thin steel sheet having a plate thickness of 0.5 mm to 1.2 mm, using a wire having a wire diameter of 0.5 mm to 0.9 mm, containing, in terms of mass %, C: 0.02% to 0.10%, Si: 0.7% to 2.0%, Mn: 0.5% to 3.0%, P $\leq$ 0.020%, and S: 0.005% to 0.020%, and having remainders consisting of Fe and inevitable impurities, a pulse in which a peak current (Ip) is 300 A to 450 A, a base current (Ib) is 20 A to 100 A, and a relation between the peak current (Ip) and the peak time (Tp) satisfies a predetermined expression (1) is added.

CITATION LIST

PATENT LITERATURE

Patent Literature 1: JP2012-170970A
Patent Literature 2: JP2001-321946A

SUMMARY OF INVENTION

TECHNICAL PROBLEM

As disclosed in Patent Literatures 1 and 2, in the related art, MAG welding or pulse MAG welding has been used to widen a weld bead width. However, in recent years, the above-described problems have not been solved in feeding control welding, which has been increasingly adopted because of advantages of weldability such as spatter reduction. The feeding control welding is a technique for alternately switching a feeding speed of a welding wire between a forward feeding period and a reverse feeding period. Generally, the feeding control welding is based on short-circuit transition, which occurs during a short-circuit period and an arc period, and thus is suitable for low heat input welding. However, in welding in which a target position of welding is shifted or a gap is generated between the steel sheets, poor bead shape or burn-through into the gap is likely to occur due to the characteristics that a penetration is shallow and a bead width is not widened. In particular, as the shift of the target position of welding or the gap becomes larger, the problems such as the poor bead shape and the poor cross-linking property become more remarkable, and the robustness is very poor. Therefore, in the feeding control welding with excellent weldability, the robustness equal to or greater than that of the MAG welding or the pulse MAG welding in the related art is desired.

Therefore, an object of the present invention is to provide a fillet welding method, a feeding control method, a power supply, and a fillet welding system capable of achieving excellent robustness even when a feeding control welding method is applied to fillet welding.

SOLUTION TO PROBLEM

The present invention has the following configuration.

(1) A fillet welding method to which a feeding control method for alternately switching a feeding speed between a forward feeding period and a reverse feeding period is applied, in which

in the feeding control method,

when a wire position phase based on a position of a welding wire at the time of switching from the reverse feeding period to the forward feeding period is set to 0 deg,

an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and

an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

(2) A feeding control method for alternately switching a feeding speed between a forward feeding period and a reverse feeding period, the feeding control method being applied to a fillet welding method, in which

when a wire position phase based on a position of a welding wire at the time of switching from the reverse feeding period to the forward feeding period is set to 0 deg,

an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and

an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

(3) A power supply having a function of performing feeding control for alternately switching a feeding speed between a forward feeding period and a reverse feeding period, the power supply being applied to a fillet welding method, in which

in the feeding control method,

when a wire position phase based on a position of a welding wire at the time of switching from the reverse feeding period to the forward feeding period is set to 0 deg,

an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and

an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

(4) A fillet welding system to which a feeding control method for alternately switching a feeding speed between a forward feeding period and a reverse feeding period is applied, in which

in the feeding control method,

when a wire position phase based on a position of a welding wire at the time of switching from the reverse feeding period to the forward feeding period is set to 0 deg,

an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and

an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

ADVANTAGEOUS EFFECTS OF INVENTION

According to the present invention, the excellent robustness can be obtained even when the feeding control welding method is applied to fillet welding.

BRIEF DESCRIPTION OF DRAWINGS

FIG. 1 is a schematic diagram illustrating a configuration example of a welding system according to the present embodiment.
FIG. 2 is a block diagram illustrating a schematic configuration related to control of a welding power supply, a welding control device, and a servo amplifier in the present embodiment.
FIG. 3 is a graph illustrating a relation among a wire feeding speed, a wire tip position, and a current detection signal according to the present embodiment.

FIG. 4 is a diagram illustrating compositions of two wires used in examples.

FIG. 5 is a diagram illustrating two welding methods used in the examples.

FIG. 6 is a graph of a welding current and a feeding speed when a feeding control method A is used as a welding method.

FIG. 7 is a graph of a welding current and a feeding speed when a feeding control method B is used as the welding method.

FIG. 8 is a diagram illustrating welding conditions and measured data when pulse MAG welding is used in each of the feeding control method A, the feeding control method B, and a comparative example.

FIG. 9A is a diagram illustrating target shift test results based on the welding conditions and the measured data in Test No. 1.

FIG. 9B is a diagram illustrating target shift test results based on the welding conditions and the measured data in Test No. 2.

FIG. 9C is a diagram illustrating target shift test results based on the welding conditions and the measured data in Test No. 3.

FIG. 9D is a diagram illustrating target shift test results based on the welding conditions and the measured data in Test No. 4.

FIG. 9E is a diagram illustrating target shift test results based on the welding conditions and the measured data in Test No. 5.

DESCRIPTION OF EMBODIMENTS

Hereinafter, embodiments of a fillet welding method, a feeding control method, a power supply, and a fillet welding system according to the present invention will be described in detail with reference to the drawings.

Hereinafter, embodiments of a welding method, a control method, a power supply, and a welding system for gas-shielded arc welding according to the present invention will be described in detail with reference to the drawings. The present embodiment is an example of a case of using a welding robot, and the welding control method according to the present invention is not limited to the configuration of the present embodiment. For example, an automatic welding device using a carriage may be applied instead of a welding robot body, or a portable small welding robot may be applied.

Examples of the feeding control method include a type in which welding is performed based on a short-circuit transition mode in which a feeding speed of a welding wire is alternately switched between a forward feeding period and a reverse feeding period to generate a short-circuit period and an arc period (Hereinafter, also referred to as a "short-circuit type feeding control method"), and a type in which welding is performed based on a globular transition mode in which the feeding speed of the welding wire is alternately switched between the forward feeding period and the reverse feeding period to reduce the occurrence of the short-circuit period (Hereinafter, also referred to as a "short-circuit inhibition type feeding control method".). The welding method of the present invention is not particularly limited, and in the present embodiment, a system configuration of the short-circuit inhibition type feeding control method will be described as an example. Further, in the present embodiment, lap fillet welding will be described as an example of fillet welding.

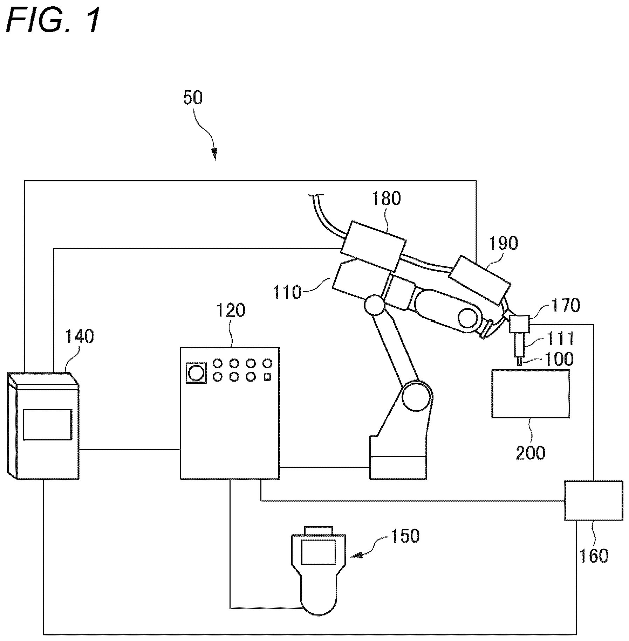

FIG. 1 is a schematic diagram illustrating a configuration example of the welding system according to the present embodiment. A welding system 50 includes a welding robot 110, a welding control device 120, a welding power supply 140, a controller 150, a push motor 180 to feed a welding wire 100, a servo motor 170, a servo amplifier 160 to control the servo motor 170, and a wire buffer 190. The push motor 180 feeds the welding wire 100.

The welding power supply 140 is connected to the welding robot 110 via a positive power cable (not illustrated) so as to be able to energize the welding wire 100 serving as a consumable electrode, and is connected to a workpiece (hereinafter, also referred to as a "base metal") 200 via a negative power cable (not illustrated). The connection is for a case of performing welding with reverse polarity. When the welding is performed with positive polarity, the welding power supply 140 may reverse the polarity.

In addition, the welding power supply 140 and the push motor 180 for feeding the welding wire 100 are connected to each other by a signal line, and a feeding speed of the welding wire can be controlled. In the feeding control of the present embodiment, the push motor 180 rotates only in a forward rotation direction, and the servo motor 170, which will be described later, is switched between the forward rotation direction and a reverse rotation direction.

The welding robot 110 includes a welding torch 111 as an end effector. The welding torch 111 has an energizing mechanism for energizing the welding wire 100, that is, a welding tip. The welding wire 100 generates an arc from a tip thereof by being energized from the welding tip, and welds the workpiece 200 to be welded by the heat. The welding tip may be generally referred to as a contact tip.

The welding torch 111 includes a shielding gas nozzle that serves as a mechanism for ejecting a shielding gas. The shielding gas is not particularly limited, and due to the characteristics of the control to be used in the present embodiment, the shielding gas may have a gas composition that takes a globule transition form, and specifically, the shielding gas preferably contains at least one gas among carbon dioxide gas, nitrogen gas, hydrogen gas, and oxygen gas, which have a high potential gradient. In addition, from the viewpoint of versatility, in a case of a mixed gas with argon gas (Hereinafter, also referred to as "Ar gas".), a system in which at least 10% by volume or more of carbon dioxide gas is mixed is more preferable, a system in which 90% by volume or more of carbon dioxide gas is mixed is further preferable, and it is still more preferable to use carbon dioxide gas alone. The shielding gas is supplied from a shielding gas supply device (not illustrated).

The servo motor 170 is provided near the welding torch 111. The servo amplifier 160 connected to the servo motor 170 controls the servo motor 170. In the present embodiment, the welding torch 111 is independent of the servo motor 170, and the welding torch 111 may be provided with the servo motor 170 (Also referred to as a servo torch.). The servo motor 170 is switched between the forward rotation direction and the reverse rotation direction based on a forward and reverse feeding command to perform feeding control. As will be described in detail later, the servo amplifier 160 enables a high-speed calculation processing, and has a forward and reverse feeding command generating unit 161.

The wire buffer 190 is disposed between the push motor 180 and the servo motor 170. The push motor 180 feeds the wire only in the forward rotation direction, while the servo motor 170 feeds the wire in both the forward rotation direction and the reverse rotation direction, so that the push motor 180 and the servo motor 170 may have different feeding directions, which can easily result in a situation in which a large load is applied to the wire within a feeding path. The wire buffer is provided so that the feeding control can also be appropriately performed in such a situation of the feeding system, thereby preventing the buckling of the wire and the like.

The welding wire 100 used in the present embodiment is not particularly limited. For example, either a solid wire containing no flux or a flux-cored wire containing a flux may be used. Furthermore, a material of the welding wire 100 is not limited. For example, the material may be mild steel, stainless steel, aluminum, or titanium, and a wire surface may be plated with Cu or the like. A diameter of the welding wire 100 is also not particularly limited. In the present embodiment, the diameter preferably has an upper limit of 1.6 mm and a lower limit of 0.8 mm. In this way, types and compositions of the welding wire are not limited, but wire compositions particularly suitable for the welding method according to the present embodiment will be described later.

In the present embodiment, a specific configuration of the workpiece 200 is not particularly limited, and welding conditions such as a joint shape, a welding position, and a groove shape are also not particularly limited. The welding control device 120 mainly controls an operation of the welding robot 110. Therefore, the welding control device 120 may be referred to as a robot controller. The welding control device 120 holds teaching data that defines an operation pattern, a welding start position, a welding end position, welding conditions, a wiving operation, and the like of the welding robot 110 in advance, and instructs the welding robot 110 on these data to control the operation of the welding robot 110. In addition, the welding control device 120 applies welding conditions such as a welding current, a welding voltage, and a feeding speed during a welding operation to the welding power supply 140 in accordance with the teaching data.

As illustrated in FIG. 1, the welding system 50 of the present embodiment has a configuration in which the welding control device 120 is independent of the welding power supply 140, and may have a configuration in which the welding control device 120 is provided in the welding power supply 140.

The controller 150 is connected to the welding control device 120, creates or displays a program for operating the welding robot 110, and inputs the teaching data. Information input to the controller 150 by a user is given to the welding control device 120. The controller 150 may also have a function of manually operating the welding robot 110. The connection between the controller 150 and the welding control device 120 may be wired or wireless.

The welding power supply 140 generates an arc between the welding wire 100 and the workpiece 200 by supplying electric power to the welding wire 100 and the workpiece 200 according to a command from the welding control device 120. In addition, the welding power supply 140 outputs a control signal for the push motor 180 according to a command from the welding control device 120.

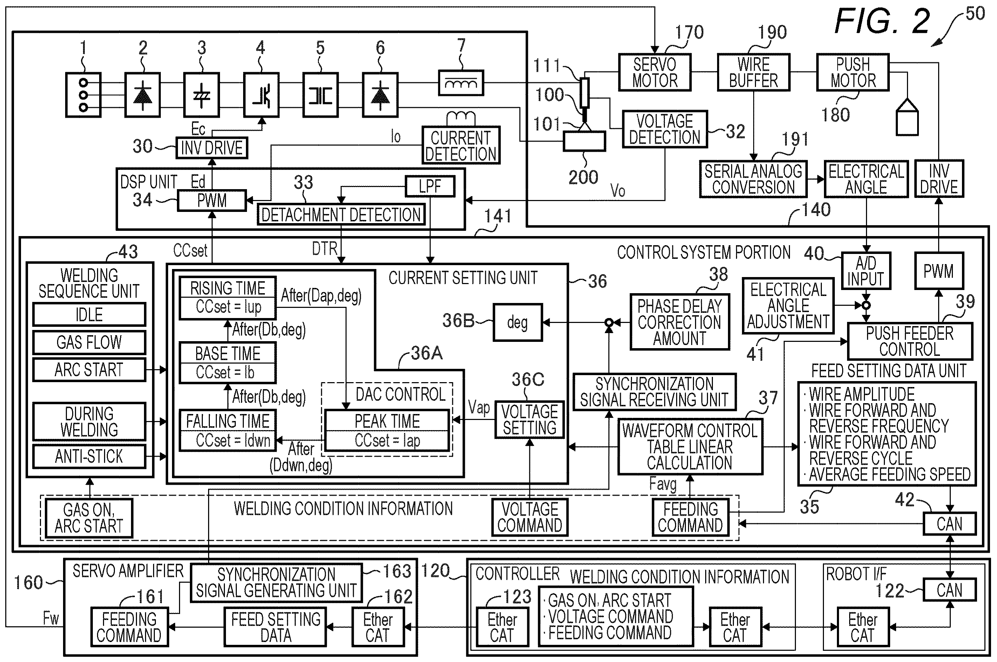

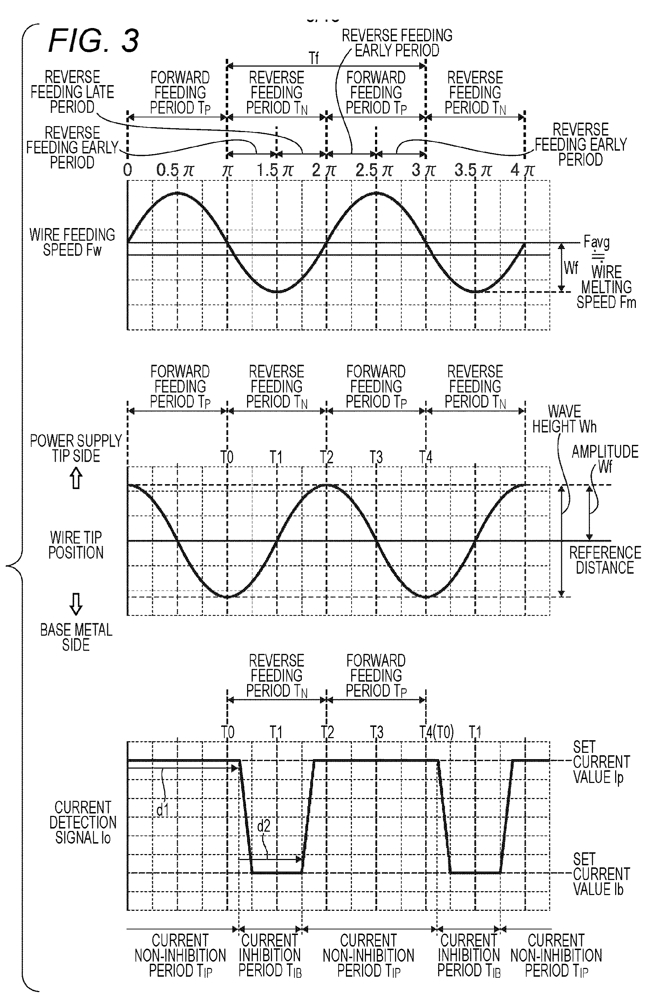

Next, a functional configuration of the welding system 50 according to the present embodiment will be described in detail with reference to FIGS. 2 and 3. FIG. 2 is a block diagram illustrating a schematic configuration related to the control of the welding power supply 140, the welding control device 120, and the servo amplifier 160 in the present embodiment. FIG. 3 is a graph illustrating a relation among a wire feeding speed, a wire tip position, and a current detection signal according to the present embodiment.

The welding power supply 140 is connected to the welding control device 120 via a digital communication, and the welding control device 120 is connected to the servo amplifier 160 via the digital communication. That is, the servo amplifier 160, the welding control device 120, and the welding power supply 140, which are connected via the digital communication, are connected to one another in this order in a line configuration. This can be interpreted as a state in which the servo amplifier 160 and the welding power supply 140 are indirectly connected to each other via the digital communication. The servo amplifier 160, the welding power supply 140, and the welding control device 120 may be connected to one another in this order in a line configuration. This can be interpreted as a state in which the servo amplifier 160 and the welding power supply 140 are directly connected to each other via the digital communication.

In the present embodiment, the welding power supply 140 and the welding control device 120 are in communication with each other via a controller area network (CAN), which is one of industrial field networks, the welding control device 120 and the servo amplifier 160 are in communication with each other via Ethernet for Control Automation Technology (EtherCAT) (registered trademark), which is one of the industrial field networks, and the communication is not limited thereto.

(Functional Configuration of Welding Power Supply)

A control system portion 141 of the welding power supply 140 is executed, for example, through the execution of a program by the welding control device 120 or a computer (not illustrated). The control system portion 141 of the welding power supply 140 includes a current setting unit 36. The current setting unit 36 according to the present embodiment has a function of setting various current values that define a welding current flowing through the welding wire 100 according to a process such as arc start or during welding that is determined in a welding sequence unit, and a function of setting a period start time and a period end time in each period of the current control. The current setting unit 36 includes a target current setting unit 36A, a wire tip position conversion unit 36B, and a voltage setting unit 36C. The target current setting unit 36A has a function of setting a period start time and a period end time for each of a peak period Dap, a falling period Ddwn, a base period Db, and a rising period Dup related to the current control. The wire tip position conversion unit 36B has a function of obtaining information on a tip position of the welding wire 100.

Various condition settings may be determined based on, for example, setting values input by an operator in advance, a waveform control table prepared in advance, and a database of welding conditions. The setting values, the table, the database, and the like may be stored in any constituent element of the welding system 50. The setting values, the table, the database, and the like may be stored in, for example, the welding control device 120 and the welding power supply 140.

Various condition settings for each of the peak period Dap, the falling period Ddwn, the base period Db, and the rising period Dup related to a current non-inhibition period TIP (sum of the Dup period and the Dap period in the present embodiment) and a current inhibition period TIB (sum of the Ddwn period and the Db period in the present embodiment) may be determined by a waveform control table linear calculation unit 37 based on the waveform control table prepared in advance. The various condition settings referred to here mean the setting of conditions such as current value, time, or phase in the present embodiment.

Here, in the case of the short-circuit inhibition type feeding control method applied in the present embodiment illustrated in FIG. 3, the welding current indicates a pulse waveform in which welding currents during the current non-inhibition period TIP and the current inhibition period TIB are alternately repeated based on a phase related to the wire tip position (Hereinafter, also referred to as a "wire position phase".). In the present embodiment, a timing of the peak period Dap, the falling period Ddwn, the base period Db, and the rising period Dup is controlled based on the wire position phase of 0 deg to 360 deg ($0$ to $2\pi$) at which a case in which the wire tip position is closest to a tip side is set to 0 deg, and a case in which the wire tip position is closest to a base metal side is set to 180 deg. At least the welding current may be switched between the current inhibition period TIB and the current non-inhibition period TIP according to a feeding speed phase to be described later.

A set current value Ip during the peak period Dap (hereinafter, also referred to as a "peak current Ip") in the current non-inhibition period TIP calculated by the waveform control table linear calculation unit 37 and a set current value Ib during the base period Db (hereinafter, also referred to as a "base current Ib") in the current inhibition period TIB are set in the current setting unit 36 based on a setting value of an average feeding speed Favg in welding condition information stored in the control system portion 141.

In a case of a short-circuit inhibition type feeding control method of the present embodiment, the welding current is basically controlled by two values of the peak current Ip and the base current Ib. Therefore, the start time of the base period Db represents a time when the base current Ib starts, that is, a base current start time. In addition, a time when the base period Db ends represents a time when the base current Ib ends, that is, a base current end time. The time when the base period Db starts, the time when the base period Db ends, a period (time) of the falling period Ddwn, and a period (time) of the rising period Dup are calculated in the waveform control table linear calculation unit 37. The time when the peak period Dap starts may be expressed as a peak current start time, and the time when the peak period Dap ends may be expressed as a peak current end time. As illustrated in FIG. 3, a timing of the peak current end time may be determined by a setting period d1 when the wire position phase starts at 0°, and a timing of the peak current start time may be determined by a setting period d2 when the peak current end time starts. The setting period may be set according to a phase, for example, if d1 is set at 190° and d2 is set at 120°, the peak current ends at a position at which the wire position phase is 190° (d1), and the peak current starts at a position at which the wire position phase is 310° (d1 + d2).

The wire tip position conversion unit 36B determines the wire tip position based on a phase synchronization signal and a phase delay correction amount signal from the servo amplifier 160. In the present embodiment, the wire tip position may be expressed using an angle ($0$ to $2\pi$) as the wire position phase as described above, and a forward feeding start position is defined as 0 as illustrated in FIG. 3.

The phase delay correction amount signal is output from a phase delay correction unit 38. The phase delay correction unit 38 includes a database obtained in advance by setting an error between an actual forward and reverse feeding operation of the servo motor 170 and the forward and reverse feeding command of the servo amplifier 160 as a phase delay correction amount for each of various welding conditions. For example, when the various welding conditions are a wire forward and reverse frequency Tf which is a frequency when the forward feeding period and the reverse feeding period are set as one cycle, the phase delay correction amount is determined based on the database according to a value of the wire forward and reverse frequency to be used, and is output from the phase delay correction unit 38 as the phase delay correction amount signal.

A power supply main circuit of the welding power supply 140 includes a three-phase alternating-current power supply (hereinafter, also referred to as "alternating-current power supply") 1, a primary-side rectifier 2, a smoothing capacitor 3, a switching element 4, a transformer 5, a secondary-side rectifier 6, and a reactor 7.

An alternating-current power input from an alternating-current power supply 1 is full-wave rectified by the primary-side rectifier 2 and further smoothed by the smoothing capacitor 3 to be converted into a direct-current power. Next, the direct-current power is converted into a high-frequency alternating-current power by inverter control using the switching element 4, and then converted into a secondary-side power via the transformer 5. An alternating-current output of the transformer 5 is full-wave rectified by the secondary-side rectifier 6 and further smoothed by the reactor 7. An output current of the reactor 7 is supplied to a welding tip as an output from the power supply main circuit, and the welding wire 100 serving as a consumable electrode is energized.

The welding wire 100 is fed by the push motor 180 and servo motor 170, and generates an arc between the welding wire 100 and a base metal 200. A forward feeding period during which the tip of the welding wire 100 is moved toward the base metal 200 is referred to as a forward feeding period TP. A reverse feeding period during which the tip of the welding wire 100 is moved in a direction opposite to a direction in which the base metal 200 is located is referred to as a reverse feeding period TN. In the present embodiment, the servo motor 170 periodically feeds the welding wire 100 with the forward feeding period TP and the reverse feeding period TN as one cycle. In addition, the "tip of the welding wire" referred to herein generally refers to a wire tip when the presence of a droplet hanging down from the wire tip is ignored. That is, the wire melted by the arc is considered to be transferred to the base metal immediately.

The feeding of the welding wire 100 made by the push motor 180 is controlled by a control signal based on a push feeder control unit 39. An average value of the feeding speed is substantially the same as a melting speed. In the present embodiment, the feeding of the welding wire 100 made by the push motor 180 is also controlled by the welding power supply 140.

The push feeder control unit 39 performs control according to a state of the wire buffer 190. In the present embodiment, in order to prevent a large load from being applied to the wire in the feeding path between the push motor 180 and the servo motor 170, the wire buffer 190 is provided with a slack portion of the wire (gap portion that escapes when the wire is slack due to the influence of feeding between the motors), and an absolute encoder built in the wire buffer 190 detects a slack amount of the wire by a rotation angle. The detected value is converted into an analog signal by a serial analog conversion unit 191, and an electrical angle is calculated by an electrical angle calculation unit. The calculated electrical angle is input to an A/D input unit 40 of the welding power supply.

A differential signal obtained by calculating a difference between the electrical angle from the A/D input unit 40 and a reference value of the electrical angle preset in an electrical angle adjustment unit 41 is input to the push feeder control unit 39. The push feeder control unit 39 performs interference control to prevent a large load from being applied to the feeding system by controlling the push motor 180 so as to obtain an appropriate wire buffer amount based on the differential signal. In the present embodiment, the interference control is performed, and the present invention is not limited thereto. In the present embodiment, the absolute encoder built in the wire buffer 190 is used, and the present invention is not limited thereto. For example, a rotation angle sensor may be used, and in this case, the serial analog conversion unit 191 may not be provided.

A voltage setting signal Vap, which is a target value of a voltage to be applied to the contact tip (not illustrated), an energization position of the welding wire 100, and the base metal 200, is given as a voltage command to the voltage setting unit 36C of the current setting unit 36. The current setting unit 36 controls a welding current during each period such as the peak period Dap such that a length of the arc (Hereinafter, also referred to as an "arc length".) becomes constant based on the voltage setting signal Vap.

A voltage detection signal Vo obtained by a voltage detection unit is a measured value. In the present embodiment, the voltage detection signal Vo passes through a low-pass filter LPF, and is input to the current setting unit 36 as a detachment detection signal DTR via the detachment detection unit 33. A voltage comparison unit may be provided to amplify a difference between the voltage setting signal Vap and the voltage detection signal Vo and output the amplified difference to the current setting unit 36 as a voltage error amplification signal.

The current error amplification unit 34 amplifies a difference between a current setting signal CCset given as a target value by the current setting unit 36 and a current detection signal Io detected by a current detection unit 31, and outputs the amplified difference to an inverter drive unit 30 as a current error amplification signal Ed. The inverter drive unit 30 corrects a drive signal Ec to the switching element 4 using the current error amplification signal Ed.

The current setting unit 36 also receives the detachment detection signal DTR, which is a signal for detecting the detachment of a droplet from the tip of the welding wire 100. The detachment detection signal DTR is output from the detachment detection unit 33. The detachment detection unit 33 monitors a change in the voltage detection signal Vo output from the voltage detection unit 32, and detects the detachment of a droplet from the welding wire 100 based on the change. The detachment detection unit 33 is an example of a detection means.

The detachment detection unit 33 detects the detachment of a droplet by, for example, comparing a value obtained by differentiating or second-order differentiating the voltage detection signal Vo passed through the LPF with a threshold value for detection. The threshold value for detection is stored in advance in a storage unit (not illustrated). The detachment detection unit 33 may generate the detachment detection signal DTR based on a change in a resistance value calculated based on the voltage detection signal Vo and the current detection signal Io, which are measured values.

The waveform control table linear calculation unit 37 receives the average feeding speed Favg of the welding wire 100 to be fed. The average feeding speed Favg is stored in advance in a feed setting data unit 35. The feed setting data unit 35 is provided in the welding power supply 140 in the present embodiment, various types of information related to the feed setting may be stored in the welding control device 120, and the various types of information may be output from the welding control device 120 to the welding power supply 140.

The waveform control table linear calculation unit 37 determines values of the peak current Ip, the base current Ib, a time t1 when the base current Ib starts, a time t2 when the base current Ib ends, and the like based on the given average feeding speed Favg, and inputs the values to the current setting unit 36. As described above, the values of the wire position phase, the time, and a cycle cyc can be converted into one another, and thus a setting value of a base start phase and the like may be converted into the value of the time or the cycle cyc, and the converted value may be output to the current setting unit 36.

In the present embodiment, as illustrated in FIG. 2, the average feeding speed Favg is input to the waveform control table linear calculation unit 37, a value related to the average feeding speed Favg may be input to the waveform control table linear calculation unit 37 as a setting value, and the waveform control table linear calculation unit 37 may replace the setting value with the average feeding speed Favg. For example, in a case in which a database of the average feeding speed Favg and an average current value at which optimal welding can be performed at the average feeding speed Favg is stored in the storage unit (not illustrated), the average current value may be used as a setting value, and the setting value may be replaced with the average feeding speed Favg.

The feed setting data unit 35 may store setting values of the average feeding speed Favg, a wire amplitude Wf, a wire forward and reverse frequency Sf, a wire forward and reverse cycle Tf, and the like. The wire amplitude Wf, the wire forward and reverse frequency Sf, and the wire forward and reverse cycle Tf may be determined based on the input average feeding speed Favg. In addition, the feed setting data unit 35 may store other setting values as feed setting data. In the present embodiment, the value of the wire amplitude Wf refers to a wave height Wh illustrated in FIG. 3. That is, the setting value of the wire amplitude Wf is set to be equal to that of the wave height Wh.

In the present embodiment, a period during which a feeding speed is higher than the average feeding speed Favg is referred to as a forward feeding period, a period during which a feeding speed is lower than the average feeding speed Favg is referred to as a reverse feeding period, and the feeding in which the forward feeding period and the reverse feeding period alternately appear (Hereinafter, referred to as "amplitude feeding".) is obtained. The period during which the feeding speed is lower than the average feeding speed Favg refers to a period during which a feeding speed is less than the average feeding speed Favg, the feeding speed including a negative feeding speed, that is, a speed at which the wire tip moves in the direction opposite to the position of the base metal 200. The wire amplitude Wf gives a change width with respect to the average feeding speed Favg, and the wire forward and reverse cycle Tf gives a time of change in the wire amplitude, which is a repetition unit. The wire forward and reverse frequency Sf is a reciprocal of the wire forward and reverse cycle Tf.

The average feeding speed Favg, the wire amplitude Wf, the wire forward and reverse frequency Sf, and the wire forward and reverse cycle Tf stored in the feed setting data unit 35 are input from a digital communication unit 42 to a digital communication unit 122 of the welding control device 120. In the present embodiment, the communication of these feed setting data is performed via a CAN communication.

The welding sequence unit processes each task in order of idle, gas flow, arc start, during welding, and anti-stick based on signals of gas ON and arc start output from the welding control device 120 based on teaching data. The control is performed mainly by the current setting unit 36 in the task of "during welding". In FIG. 2, the welding condition information held by the welding control device 120 is indicated by a broken line in the welding power supply 140 for the sake of convenience.

(Functional Configuration of Welding Control Device)

As described above, the digital communication unit 122 of the welding control device 120 receives the feed

**EP 4 674 555 A1**

setting data such as the average feeding speed Favg, the wire amplitude Wf, the wire forward and reverse frequency Sf, and the wire forward and reverse cycle Tf from the feed setting data unit 35 of the welding power supply 140 via the CAN communication. The welding control device 120 includes a digital communication unit 123 for outputting the feed setting data to a digital communication unit 162 of the servo amplifier 160. In the present embodiment, the digital communication unit 123 of the welding control device 120 and the digital communication unit 162 of the servo amplifier 160 are connected to each other via an EtherCAT (registered trademark) communication.

The welding control device 120 stores various types of welding condition information such as a timing of gas or arc start (welding ON), setting values of a voltage and the average feeding speed, and outputs signals of gas ON, arc start, a voltage command, and a feeding command to the welding power supply 140 based on a program created to operate the welding robot 110.

(Functional Configuration of Servo Amplifier)

The digital communication unit 162 of the servo amplifier 160 receives the feed setting data such as the average feeding speed Favg, the wire amplitude Wf, the wire forward and reverse frequency Sf, and the wire forward and reverse cycle Tf via the EtherCAT (registered trademark) communication. The forward and reverse feeding command generating unit 161 of the servo amplifier 160 generates a feeding command for forward feeding or reverse feeding based on setting information input via the digital communication, that is, the feed setting data. More specifically, the forward and reverse feeding command generating unit 161 of the servo amplifier 160 calculates an amplitude feeding speed Ff based on the wire amplitude Wf and the wire forward and reverse cycle Tf, and calculates a feeding speed command signal Fw based on the amplitude feeding speed Ff and the average feeding speed Favg.

In the present embodiment, the feeding speed command signal Fw is represented by the following equation.

$$Fw = Ff + Favg...(A)$$

The forward and reverse feeding command generating unit 161 may detect at which wire position phase of the amplitude feeding the detachment has occurred based on the detachment detection signal DTR given from the detachment detection unit 33. The feeding speed command signal Fw represented by Equation (A) is limited to a case in which the detachment of a droplet from the tip of the welding wire 100 is detected within an assumed period. When no detachment of a droplet is detected within the assumed period, the forward and reverse feeding command generating unit 161 may switch the feeding speed command signal Fw to feeding control at a constant speed. For example, the forward and reverse feeding command generating unit 161 switches the feeding speed command signal Fw to feeding at the average feeding speed Favg. The switching from the feeding at the average feeding speed Favg to the feeding control represented by Equation (A) is determined according to a timing at which the detachment of a droplet is detected.

The servo amplifier performs inverter control of the servo motor 170 based on the feeding speed command signal Fw in the forward and reverse feeding command generating unit 161. In addition, a synchronization signal generating unit 163 of the servo amplifier 160 outputs a phase synchronization signal to the welding power supply 140. The phase synchronization signal is generated based on the feeding speed command signal Fw.

Both the welding power supply 140 and the synchronization signal generating unit 163 of the servo amplifier 160 may be connected to each other at least via an analog input and output. In this case, a synchronization signal is input to the welding power supply 140 from the servo amplifier 160 via the analog input and output. By transmitting the feed setting data such as the average feeding speed Favg, the wire amplitude Wf, the wire forward and reverse frequency Sf, and the wire forward and reverse cycle Tf via the digital communication, while transmitting the synchronization signal via an analog communication, it is possible to efficiently use the digital communication and the analog communication depending on an application.

Here, the phase related to the feeding speed command signal Fw (Hereinafter, also referred to as "feeding speed phase".) is set such that the start of forward feeding is 0 deg, the end of forward feeding and the start of reverse feeding are 180 deg $(\pi)$, and the end of reverse feeding is 360 deg $(2\pi)$. In the present embodiment, the phase synchronization signal is a synchronization signal of the feeding speed phase and a synchronization signal of the wire position phase. The synchronization signal of the feeding speed phase is a synchronization signal in which the forward feeding period (position from 0 to $\pi$) is set to ON and the reverse feeding period (position from $\pi$ to $2\pi$) is set to OFF. On the other hand, the synchronization signal of the wire position phase is a synchronization signal in which a period (position of 0.5 $\pi$ to 1.5 $\pi$) during which the wire tip approaches a base metal 200 side from a center position of a wave height when the wire is fed forward and reverse is set to ON, and a period (position of 1.5 $\pi$ to 0.5 $\pi$) during which the wire tip approaches the tip side from a center position of the wire amplitude is set to OFF. Based on the phase synchronization signal and the above-described phase delay correction amount, the tip position, that is, the wire position phase of the welding wire 100 is determined by the wire tip position conversion unit 36B of the welding power supply 140.

(Welding Method)

Next, a welding method according to the present embodiment will be described. The welding method according to the present embodiment is based on a technical idea of obtaining a penetration and a wide bead width by locally increasing an arc pressure at a specific wire position phase and pushing out a molten pool in the feeding control method.

In the feeding control method, the wire tip is closest to the molten pool when being switched from forward feeding to reverse feeding. When the wire tip approaches the molten pool, the arc length is shortened, and the arc pressure applied to the molten pool instantaneously increases. Therefore, before and after the wire position phase in which the arc pressure is locally increased is switched from forward feeding to reverse feeding, that is, 90 deg ($0.5 \pi$) to 270 deg ($1.5 \pi$), in this period, when the welding current is further increased, the effect of pushing out the molten pool further increases. However, in such control, the molten pool is pushed out excessively, and dripping or the like of a melted portion, which is caused by the influence of burn-through or gravity, may occur, and the cross-linking property may deteriorate. In addition, in the reverse feeding period during which a droplet is detached, the arc pressure for pushing up the droplet also increases. Therefore, the droplet detachment is inhibited during the reverse feeding period, and droplet transfer becomes unstable, which causes the generation of spatter. Therefore, in the welding method according to the present embodiment, in a local range in which the wire position phase is 90 deg ($0.5 \pi$) to 180 deg ($1.5 \pi$), the welding current is largely increased to push out the molten pool, and the penetration and the wide bead width are secured, and in a range in which the wire position phase is 180 deg ($\pi$) to 270 deg ($1.5 \pi$), the welding current is largely decreased to provide a cooling period, thereby preventing the dripping of the molten portion or the droplet detachment failure due to the influence of the burn-through and the gravity. Accordingly, the robustness in the fillet welding can be ensured.

Hereinafter, the welding currents in the above-described wire position phases will be described in detail.

(Period during which Wire Position Phase is 90 deg to 180 deg: Average Current or More)

The period during which the wire position phase is 90 deg to 180 deg is a period during which greater penetration and wider bead width are achieved, and an average value $I_{90 \text{ deg to } 180 \text{ deg\_ave}}$ of welding currents in this period is an average current value $I_{ave}$ or more. The average welding current value $I_{ave}$ is based on a set welding current value $I_{set}$, and thus $I_{ave} \approx I_{set}$ in the present embodiment. By setting the average current value $I_{90 \text{ deg to } 180 \text{ deg\_ave}}$ in the period during which the wire position phase is 90 deg to 180 deg as a current value equal to or larger than the average current value $I_{set}$, the greater penetration and the wider bead width are achieved in the feeding control method. In order to achieve the greater penetration and the wider bead width, a ratio $(I_{90 \text{ deg to } 180 \text{ deg\_ave}})/(I_{set})$ of the average value $I_{90 \text{ deg to } 180 \text{ deg\_ave}}$ of the welding currents in the period $T_{90 \text{ deg to } 180 \text{ deg}}$ during which the wire position phase is 90 deg to 180 deg to the set welding current value $I_{set}$ ($\approx$ average welding current $I_{ave}$) is 1.10 or more.

(Period during which Wire Position Phase is 180 deg to 270 deg: Average Current or Less)

The period during which the wire position phase is 180 deg to 270 deg is a cooling period during which the welding current is largely decreased. An average value $I_{180 \text{ deg to } 270 \text{ deg\_ave}}$ of the welding currents in this period is set to be equal to or smaller than the average current value $I_{ave}$. The average welding current value $I_{ave}$ is based on the set welding current value $I_{set}$, and thus $I_{ave} \approx I_{set}$ in the present embodiment. By setting the average current value $I_{180 \text{ deg to } 270 \text{ deg\_ave}}$ in the period during which the wire position phase is 180 deg to 270 deg as a current value equal to or smaller than the average current value $I_{set}$, the dripping of the molten portion or the droplet detachment failure due to the influence of the burn-through and the gravity is prevented in the feeding control method. In order to achieve the greater penetration and the wider bead width, a ratio $(I_{180 \text{ deg to } 270 \text{ deg\_ave}})/(I_{set})$ of the average value $I_{180 \text{ deg to } 270 \text{ deg\_ave}}$ of the welding currents in the period $T_{180 \text{ deg to } 270 \text{ deg}}$ during which a welding wire position is 180 deg to 270 deg to the set welding current value $I_{set}$ ($\approx$ average welding current $I_{ave}$) is 0.90 or less.

$$((I_{180 \text{ deg to } 270 \text{ deg\_ave}})/(I_{90 \text{ deg to } 180 \text{ deg\_ave}}) \leq 0.50)$$

As described above, by setting the period during which the wire position phase is 90 deg to 180 deg to be equal to or larger than the average current and the period during which the wire position phase is 180 deg to 270 deg to be equal to or smaller than the average current, the robustness in the fillet welding can be ensured. The robustness is more preferred as a difference between the average current in the period during which the wire position phase is 90 deg to 180 deg and the average current in the period during which the wire position phase is 180 deg to 270 deg is large. Specifically, it is preferred that a ratio $(I_{180 \text{ deg to } 270 \text{ deg\_ave}})/(I_{90 \text{ deg to } 180 \text{ deg\_ave}})$ of the average value $I_{90 \text{ deg to } 180 \text{ deg\_ave}}$ of the welding currents in the period $T_{90 \text{ deg to } 180 \text{ deg}}$ during which the welding wire position is 90 deg to 180 deg to the average value $I_{180 \text{ deg to } 270 \text{ deg\_ave}}$ of the welding currents in the period $T_{180 \text{ deg to } 270 \text{ deg}}$ during which the welding wire position is 180 deg to 270 deg is 0.50 or less. From the viewpoint of stability of droplet transfer, a lower limit of the ratio may be 0.10 or more.

(Wire Forward and Reverse Frequency: 50 to 150)

The wire forward and reverse frequency is preferably in a range of 50 to 150. By setting the wire forward and reverse frequency to 150 or less, it is possible to increase a difference between the average value $I_{90\,deg\,to\,180\,deg\_ave}$ of the welding currents in the period $T_{90\,deg\,to\,180\,deg}$ during which the wire position phase is 90 deg to 180 deg and the average value $I_{180\,deg\,to\,270\,deg\_ave}$ of the welding currents in the period $T_{180\,deg\,to\,270\,deg}$ during which the wire position phase is 180 deg to 270 deg, and more preferable robustness can be obtained. On the other hand, by setting the wire forward and reverse frequency to 50 or more, the stability of droplet transfer can be further maintained.

(Wire Amplitude: 3.3 to 6.3)

The wire amplitude is preferably in a range of 3.3 to 6.3. By setting the wire amplitude to 3.3 or more, the stability of droplet transfer can be maintained. On the other hand, by setting the wire amplitude to 6.3 or less, the wire tip approaches the molten pool and the arc pressure increases while preventing a short circuit in the period during which the wire position phase is 90 deg to 180 deg, and thus the greater penetration and the wider bead width can be achieved.

(Welding Wire)

In the feeding control method, when forward feeding or reverse feeding is performed, there is a wire position phase in which a wire is fed at an excessively high feeding speed, and there is a wire position phase in which the feeding speed becomes 0, and thus a large speed variation occurs in one cycle in which forward feeding and reverse feeding are performed. This speed variation is particularly noticeable in the short-circuit inhibition type feeding control. Specifically, in the present embodiment, when the wire position phase is 90 deg, the feeding speed reaches a maximum speed during forward feeding, when the wire position phase passes 180 deg, the feeding speed becomes 0, further when the wire position phase is 270 deg, the feeding speed reaches a maximum speed during reverse feeding, and the feeding speed becomes 0 just before the wire position phase is 360 deg. As described above, there is an effect of pushing in the molten pool with a high arc pressure when the wire position phase is 90 deg to 180 deg, and at the same time widening a width of the molten pool, but this period is a period during which the feeding speed becomes 0 from the maximum speed during forward feeding, an inertial force is applied to a droplet formed at the wire tip, and the detachment of the droplet or the swinging of the droplet at an unintended timing is likely to occur. When a droplet is detached at an unintended timing such as during the forward feeding period, a timing of droplet transfer becomes unstable, and an increase in spatter or a poor bead shape may occur. In addition, when the droplet swings, the arc is deflected in accordance with the movement of the swinging droplet, so that the position at which the molten pool is pushed in varies depending on the arc pressure, and is not concentrated at one point, and thus a good penetration and a wide bead width cannot be obtained. Therefore, it is preferred to prevent the detachment of the droplet or the swinging of the droplet even when an excessive inertial force is applied.

Generally, in order to prevent the detachment of the droplet at an unintended timing or the swinging of the droplet, a welding wire may be designed to control the physical properties of the droplet at the time of being molten, such as to increase a viscosity of the droplet, and when the physical properties of the droplet at the time of being molten are controlled, the compositions are limited, and applicable wire compositions are limited. Therefore, in the welding method according to the present embodiment, it is preferred that the welding wire can prevent the detachment of the droplet or the swinging of the droplet even when an excessive inertial force is applied without considering the physical properties of the droplet. On the other hand, the inventors have found that, by applying a welding wire containing oxygen and trace amounts of strong deoxidizing elements, such as Ti, Al, Mg, and Zr as a welding wire suitable for the welding method according to the present embodiment, it is possible to prevent the detachment of the droplet or the swinging of the droplet even when an excessive inertial force is applied, without controlling the physical properties of the droplet according to the compositions. This is because the welding wire is melted by the arc, and the strong deoxidizing elements such as Ti, Al, Mg, and Zr combine with the oxygen in the wire, whereby an oxide film of the strong deoxidizing elements is formed on the droplet surface. The oxide film has a high interfacial tension with the surrounding gas and acts to reduce a surface area of the droplet itself, and thus the droplet is less likely to be detached at an initial droplet weight when the droplet starts to grow, and the swinging is also prevented.

Here, it is needless to say that the strong deoxidizing elements contained in the wire have a high affinity with oxygen, and if there is no element whose oxide has a high melting point, no oxide film is formed on the droplet surface, and thus the strong deoxidizing elements to be added to the welding wire are preferably selected from Ti, Al, Mg, and Zr. The type of welding wire may be a metal-based flux-cored wire, and it is preferred to apply a solid wire from the viewpoint of easily controlling an amount of oxygen in the wire.

Hereinafter, a form of a welding wire optimum for the welding method according to the present embodiment will be described in detail. In the following description, an amount of each of components in the wire is defined by a content relative to a total mass of the wire.

(C: 0.20 mass % or less (including 0 mass %))

C is a component that has a deoxidizing effect and an effect of improving the mechanical properties of a weld metal. A content of C may be appropriately adjusted according to a strength of the application, and in the welding method according to the present embodiment, C does not have to be contained as long as the strength can be secured by other elements. That is, the content of C may be 0 mass %. However, there is a deoxidizing effect when C is contained, and thus it is preferred to set the content of C to 0.20 mass % or less in order to stably form an oxide film on a droplet surface. Further, in the application of lap fillet welding of 440 MPa to 980 MPa class steel sheets applied to suspension parts of an automatic vehicle, it is more preferred to determine the content so that a MIX value to be described later falls within an appropriate range.

(Si: 1.00 mass % or less (including 0 mass %))

Si is a deoxidizing agent and is a component that has an effect of improving the mechanical properties of the weld metal. A content of Si may be appropriately adjusted according to the strength of the application, and in the welding method according to the present embodiment, Si does not have to be contained as long as the strength can be secured by other elements. That is, the content of Si may be 0 mass %. However, a melting point of an oxide of Si is 1710°C, and when Si is bonded to oxygen in the molten pool to form an oxide, the oxide may be in a molten state on a surface of the molten pool. The molten oxide has a very high viscosity, and thus it becomes a factor that inhibits a deep penetration and expansion of the bead width when the wire position phase is 90 deg to 180 deg. When the oxide of Si remains as slag on a weld bead, an electrodeposition coating film cannot be formed. Therefore, the content of Si is preferably as low as possible, and is preferably 1.00 mass % or less, more preferably 0.50 mass % or less, and still more preferably 0.20 mass % or less. In particular, by limiting the content of Si to 0.50 mass % or less, an increase in viscosity of the molten pool can be prevented, resulting in good robustness, and furthermore, compositions of the slag formed on the weld bead change, resulting in thin slag with good adhesion on which an electrodeposition coating film can be formed. In addition to reducing the content of Si, in the application of lap fillet welding of 440 MPa to 980 MPa class steel sheets applied to the suspension parts of an automatic vehicle, it is more preferred that the MIX value to be described later falls within an appropriate range.

(Mn: 1.30 mass % to 2.40 mass %)

Similar to Si, Mn is a deoxidizing agent and is a component that has an effect of improving the mechanical properties of the weld metal. A content of Mn may be appropriately adjusted according to the strength of the application, and in the welding method according to the present embodiment, Mn does not have to be contained as long as the strength can be secured by other elements. That is, the content of Mn may be 0 mass %. When the content of Si is limited, the content of Si may be supplemented with the content of Mn, and when Mn is contained in a range of 1.30 mass % to 2.40 mass %, it is preferred that the mechanical properties are balanced without impairing the effect of the present embodiment. Further, in the application of lap fillet welding of 440 MPa to 980 MPa class steel sheets applied to the suspension parts of an automatic vehicle, it is more preferred to determine the content so that the MIX value to be described later falls within an appropriate range.

(P: 0.025 mass % (including 0 mass %))

P is an element related to the cracking of the weld metal. The lower the content of P in the weld metal, the better a cracking resistance, and thus P may not be particularly contained in the welding method according to the present embodiment. That is, the content of P may be 0 mass %. From the viewpoint of the cracking resistance, the content of P in the wire is preferably 0.025 mass % or less.

(S: 0.030 mass % (including 0 mass %))

S is a component that reduces a surface tension of a molten metal. The lower the surface tension, the more the droplet detachment tends to be promoted, and thus in the present invention, in order to prevent the droplet detachment between the wire position of 90 deg to 180 deg, it is preferred to set the content of S to 0.030 mass % or less. From the viewpoint of preventing the droplet detachment, S may not be particularly contained (may be 0 mass %), but an appropriate amount of S affects the physical properties of the surface of the molten pool and has an effect of improving a shape of the weld bead, and thus it is more preferred to contain 0.001 mass % of S.

(Cu: 0.50 mass % or less (including 0 mass %))

Cu is a component that has an effect of improving the mechanical properties of the weld metal. A content of Cu may be appropriately adjusted according to the strength of the application, and in the welding method according to the present embodiment, Cu does not have to be contained as long as the strength can be secured by other elements. That is, the content of Cu may be 0 mass %. In addition, Cu may be added to the welding wire as a plating, and the content of Cu in the wire is preferably 0.50 mass % or less with respect to a total plating amount. This is because by limiting the content of Cu to 0.50 mass % or less, a balance with other elements that improve the mechanical properties is achieved, and the weld metal does not have an excessive strength. Further, in the application of lap fillet welding of 440 MPa to 980 MPa class steel sheets applied to the suspension parts of an automatic vehicle, it is more preferred to determine the content so that the MIX value to be described later falls within an appropriate range.

(Ni: 1.00 mass % or less (including 0 mass %))

Ni is a component that has an effect of improving the mechanical properties of the weld metal. A content of Ni may be appropriately adjusted according to the strength of the application, and in the welding method according to the present embodiment, Ni does not have to be contained as long as the strength can be secured by other elements. That is, the content of Ni may be 0 mass %. By limiting the content of Ni to 1.00 mass % or less, a balance with other elements that improve the mechanical properties can be achieved and the weld metal does not have an excessive strength, and thus it is preferred to set the content of Ni to 1.00 mass % or less. Further, in the application of lap fillet welding of 440 MPa to 980 MPa class steel sheets applied to the suspension parts of an automatic vehicle, it is more preferred to determine the content so that the MIX value to be described later falls within an appropriate range.

(Cr: 1.00 mass % or less (including 0 mass %))

Cr is a component that has an effect of improving the mechanical properties of the weld metal. A content of Cr may be appropriately adjusted according to the strength of the application, and in the welding method according to the present embodiment, Cr does not have to be contained as long as the strength can be secured by other elements. That is, the content of Cr may be 0 mass %. By limiting the content of Cr to 1.00 mass % or less, a balance with other elements that improve the mechanical properties can be achieved and the weld metal does not have an excessive strength, and thus it is preferred to set the content of Cr to 1.00 mass % or less. Further, in the application of lap fillet welding of 440 MPa to 980 MPa class steel sheets applied to the suspension parts of an automatic vehicle, it is more preferred to determine the content so that the MIX value to be described later falls within an appropriate range.

(Mo: 1.00 mass % or less (including 0 mass %))

Mo is a component that has an effect of improving the mechanical properties of the weld metal. A content of Mo may be appropriately adjusted according to the strength of the application, and in the welding method according to the present embodiment, Mo does not have to be contained as long as the strength can be secured by other elements. That is, the content of Mo may be 0 mass %. By limiting the content of Mo to 1.00 mass % or less, a balance with other elements that improve the mechanical properties can be achieved and the weld metal does not have an excessive strength, and thus it is preferred to set the content of Mo to 1.00 mass % or less. Further, in the application of lap fillet welding of 440 MPa to 980 MPa class steel sheets applied to the suspension parts of an automatic vehicle, it is more preferred to determine the content so that the MIX value to be described later falls within an appropriate range.

(V: 0.50 mass % or less (including 0 mass %))

V is a component that has an effect of improving the mechanical properties of the weld metal. A content of V may be appropriately adjusted according to the strength of the application, and in the welding method according to the present embodiment, V does not have to be contained as long as the strength can be secured by other elements. That is, the content of V may be 0 mass %. By limiting the content of V to 0.50 mass % or less, a balance with other elements that improve the mechanical properties can be achieved and the weld metal does not have an excessive strength, and thus it is preferred to set the content of V to 0.50 mass % or less. Further, in the application of lap fillet welding of 440 MPa to 980 MPa class steel sheets applied to the suspension parts of an automatic vehicle, it is more preferred to determine the content so that the MIX value to be described later falls within an appropriate range.

(B: 0.010 mass % or less (including 0 mass %))

B is a component that has an effect of improving the mechanical properties of the weld metal. A content of B may be appropriately adjusted according to the strength of the application, and in the welding method according to the present embodiment, B does not have to be contained as long as the strength can be secured by other elements. That is, the content of B may be 0 mass %. By limiting the content of B to 0.010 mass % or less, a balance with other elements that improve the mechanical properties can be achieved and the weld metal does not have an excessive strength, and thus it is preferred to set the content of B to 0.010 mass % or less. Further, in the application of lap fillet welding of 440 MPa to 980 MPa class steel sheets applied to the suspension parts of an automatic vehicle, it is more preferred to determine the content so that the MIX value to be described later falls within an appropriate range.

(Total amount of Ti, Al, Mg, and Zr: 0.001 mass % to 0.450 mass %)

$$((Ti + Al + Mg + Zr)/O: 0.5 \text{ to } 150)$$

Ti, Al, Mg, and Zr are strong deoxidizing elements having very high affinity with O (oxygen), and melting points of oxides thereof are higher than the melting point of iron. When O (oxygen) to be described later and at least one of Ti, Al, Mg, and Zr are contained in the welding wire, an oxide film is formed on the droplet surface at the time of droplet formation at the tip of the welding wire. By forming the oxide film, the feeding speed is locally changed depending on the wire position, and a shape of the droplet is less likely to be changed even when an inertial force is applied to the droplet, and thus it is possible to prevent the swinging of the droplet or the droplet detachment at an unintended wire position phase. The total content of the strong deoxidizing elements (Ti, Al, Mg, and Zr) capable of sufficiently exhibiting the above-described effect is preferably 0.001 mass % or more, more preferably 0.050 mass % or more, and still more preferably 0.150 mass % or more. In addition, when the contents of Ti, Al, Mg, and Zr are excessive, the amount of slag on the weld bead increases, and compositions of the slag also change depending on the contents of Ti, Al, Mg, and Zr, and thus in the application of lap fillet welding of 440 MPa to 980 MPa class steel sheets applied to the suspension parts of an automatic vehicle, from the viewpoint of bead appearance or electrodeposition coating properties, the total amount of Ti, Al, Mg, and Zr is preferably limited to 0.450 mass % or less, and more preferably limited to 0.380 mass % or less. In addition, in a relation between O (oxygen) and Ti, Al, Mg, and Zr suitable for forming an oxide film on the droplet surface at the time of forming the droplet at the tip of the welding wire, a value calculated based on (Ti + Al + Mg + Zr/) O is preferably in a range of 0.5 to 150, and more preferably in a range of 0.5 to 75.0.

(O: 0.0010 mass % to 0.0100 mass %)

When O is contained together with the strong deoxidizing elements, an oxide film is formed on the droplet surface at the time of forming the droplet at the tip of the welding wire, and it is possible to prevent the swing of the droplet or the droplet detachment at an unintended wire position. In the welding method according to the present embodiment, the content of O which is effective in preventing the swing of the droplet or the droplet detachment at the unintended wire position is preferably 0.0010 mass % or more, and more preferably 0.0015 mass % or more. In addition, when O is excessively contained in the wire, an amount of slag on the weld bead increases, which may affect the bead appearance, and thus O is preferably 0.0100 mass % or less, more preferably 0.0080 mass % or less, and still more preferably 0.0050 mass % or less.

(N: 0.0300 mass % or less)

N is a component that has an effect of improving the mechanical properties of the weld metal. A content of N may be appropriately adjusted according to the strength of the application, and in the welding method according to the present embodiment, N does not have to be contained as long as the strength can be secured by other elements. That is, the content of N may be 0 mass %. By limiting the content of N to 0.0300 mass % or less, a balance with other elements that improve the mechanical properties can be achieved and the weld metal does not have an excessive strength, and thus it is preferred to set the content of N to 0.0300 mass % or less.

$$(0.35 \leqslant \text{MIX value} \leqslant 1.40)$$

MIX value = C + Si/24 + Mn/6 + Ni/40 + Cr/5+Mo/4 + V/4 + Cu/13. In order to improve the robustness by preventing the increase in viscosity of the molten pool and to improve the electrodeposition coating properties by controlling the compositions of the slag, it is necessary to limit the content of Si to 0.50 mass % or less, and thus it is necessary to compensate for the mechanical properties by using other elements to compensate for the reduced content of Si, and it is preferred to balance the other elements such that the MIX value is in the range of 0.35 to 1.40.

(Ti: 0.030 mass % to 0.250 mass %)

(Al: 0.001 mass % to 0.300 mass %)

Ti and Al are preferably selected as the strong deoxidizing elements to be contained. The oxides of Mg and Zr have melting points of 2500°C or higher, and the lower the temperature, the higher the affinity with oxygen, and thus a thick oxide film is formed on the entire droplet. Therefore, a thick oxide film is also formed on an upper portion of a droplet having a low temperature, that is, in the vicinity of a boundary between the droplet and the wire, which may inhibit the occurrence of necking and prevent the droplet detachable at a droplet detachment position in a latter half (270 deg to 360 deg) during reverse feeding of the wire. On the other hand, the melting points of the oxides of Ti and Al are 2100°C or below, and as compared with Mg and Zr, the oxide film does not become thicker and is less likely to be formed in the vicinity of the boundary between the droplet and the wire, and thus necking occurs at the boundary between the wire and the droplet, and the droplet is detached in the latter half during reverse feeding of the wire. Therefore, Ti and Al are preferably contained as the strong deoxidizing elements, the content of Ti is preferably in a range of 0.030 mass % to 0.250 mass %, and the content of Al is preferably in a range of 0.001 mass % to 0.300 mass %, and more preferably in a range of 0.001 mass % to 0.200 mass %. The content of Al is more preferably more than 0.10 mass %. In addition, when a ratio (Ti/Al) of the content of Ti to the content of Al is 0.3 to 20, the above-described effect is promoted. In addition, from the viewpoint of further improving the electrodeposition coating properties, when the content of Si is limited to 0.5 mass % or less and the compositions of the slag formed on the weld bead are controlled, the ratio (Ti/Al) of the content of Ti to the content of Al is still more preferably 0.4 to 13.0, and even more preferably 0.4 to 3.0.

In the latter half during reverse feeding of the wire, in order to stably detach the wire by an inertial force, a maximum feeding speed during reverse feeding is preferably set to 50 m/min or higher. On the other hand, in the welding method according to the present embodiment, in a latter half during forward feeding (90 deg to 180 deg), it is necessary to instantaneously apply a high current and increase the arc pressure on the molten pool to obtain a penetration and a wide bead width, and thus naturally, it is necessary to make a maximum feeding speed during forward feeding equal to or close to the maximum feeding speed during reverse feeding. However, the higher the maximum speed during forward feeding, the higher possibility that a droplet is swung or detached in the latter half of forward feeding (90 deg to 180 deg). In the present embodiment, when Al and Ti are contained and the oxide film is controlled, it is possible to prevent the swinging or the detachment of the droplet in the latter half during forward feeding (90 deg to 180 deg) and to promote the detachment of the droplet in the latter half during reverse feeding. Specifically, the distribution of the strong deoxidizing elements is preferably (Ti + Al)/(Ti + Al + Mg + Zr) > 0.5, and more preferably (Ti + Al)/(Ti + Al + Mg + Zr) ≥ 0.95, and it is still more preferred that the content of Mg and Zr is equal to or less than the content of inevitable impurities and that the strong deoxidizing elements include only Ti and Al.

(Remainder: Fe and Unavoidable Impurities)

The remainder of the wire preferably used in the present embodiment consists of Fe and unavoidable impurities. Examples of the unavoidable impurities include Nb, Li, Sn, Sb, Bi, and As. The content of these unavoidable impurities is preferably 0.0100 mass % or less, and more preferably 0.0050 mass % or less with respect to the total mass of the wire. A total content of these unavoidable impurities is preferably 0.0200 mass % or less with respect to the total mass of the wire.

Examples

Hereinafter, the present embodiment is described in more detail with reference to Examples, but the present invention is not limited to these Examples, and can be carried out by adding changes within the scope that can conform to the gist of the present invention, and all of which are included in the technical scope of the present invention.

(Welding Wire)

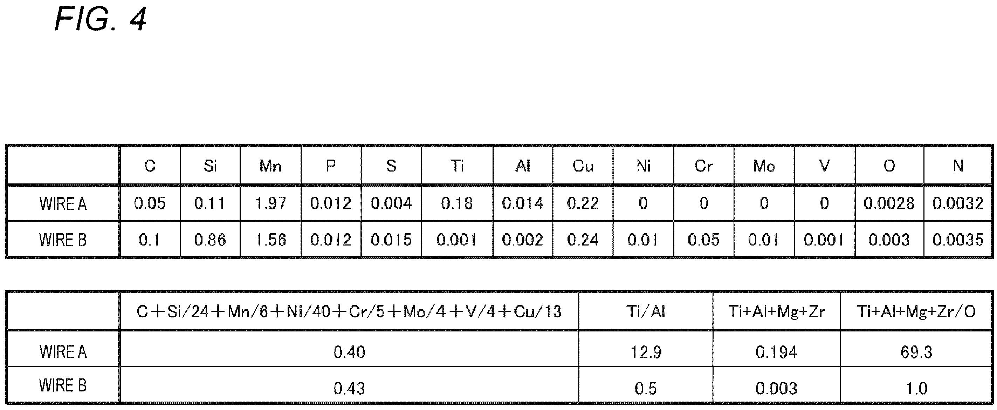

FIG. 4 is a diagram illustrating compositions of two wires used in examples. In the examples, two types of wires A and B were used. The components contained in each wire are as illustrated in FIG. 4. Numerical values in FIG. 4 all indicate mass %. The remainder other than the wire components illustrated in FIG. 4 consists of Fe and unavoidable impurities.

(Welding Control Method)

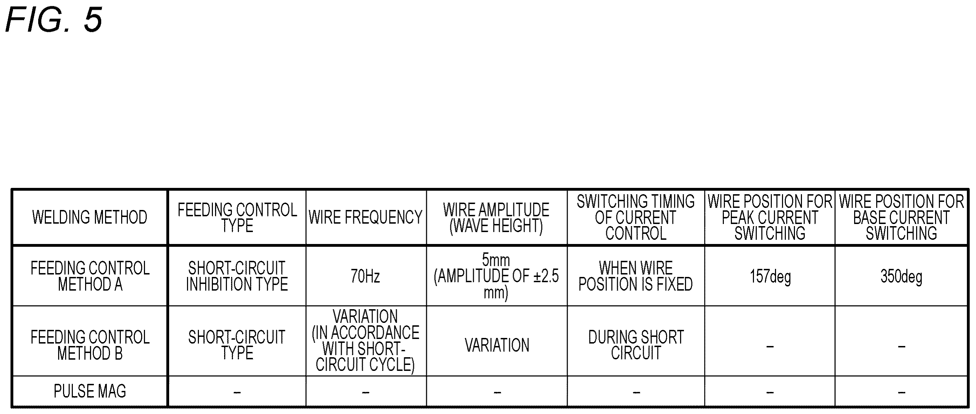

FIG. 5 is a diagram illustrating two welding methods used in the examples. In the examples, two types of the feeding control method A and the feeding control method B were used as the welding method. General pulse MAG welding was used as a comparative example.

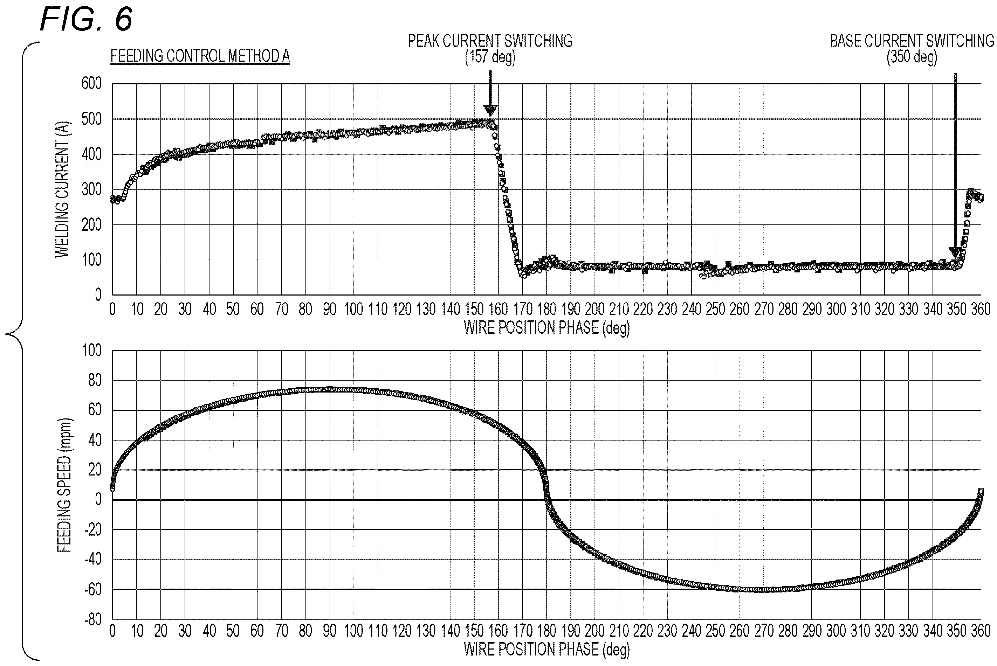

The feeding control method A is a short-circuit inhibition type method with a wire frequency of 70 Hz and a wave height of 5 mm (amplitude of $\pm$2.5 mm). A switching timing of the current control is when a wire position is fixed. The wire position for peak current switching is 157 deg, and the wire position for base current switching is 350 deg (see FIG. 6).

The feeding control method B is a short-circuit type method. The wire frequency varies in accordance with a short-circuit cycle. The wire amplitude also varies. The switching timing for the current control is when a short circuit is detected.

(Welding Conditions)

The welding conditions were set as follows:

- Steel sheet: an SPH440 steel sheet with 200 mm length $\times$ 50 mm width $\times$ 2.3 mm thickness
- Welding position: horizontal lap fillet welding
- Shielding gas: 100% by volume of $CO_2$ gas, 80% by volume of Ar + 20% by volume of $CO_2$ gas
- Average current: 200 A to 250 A
- Average voltage: 19 V to 27 V
- Wire feeding speed: 7.0 m/min
- Travel speed: 100 cm/min
- Welding length: 150 mm

(Evaluation Results)

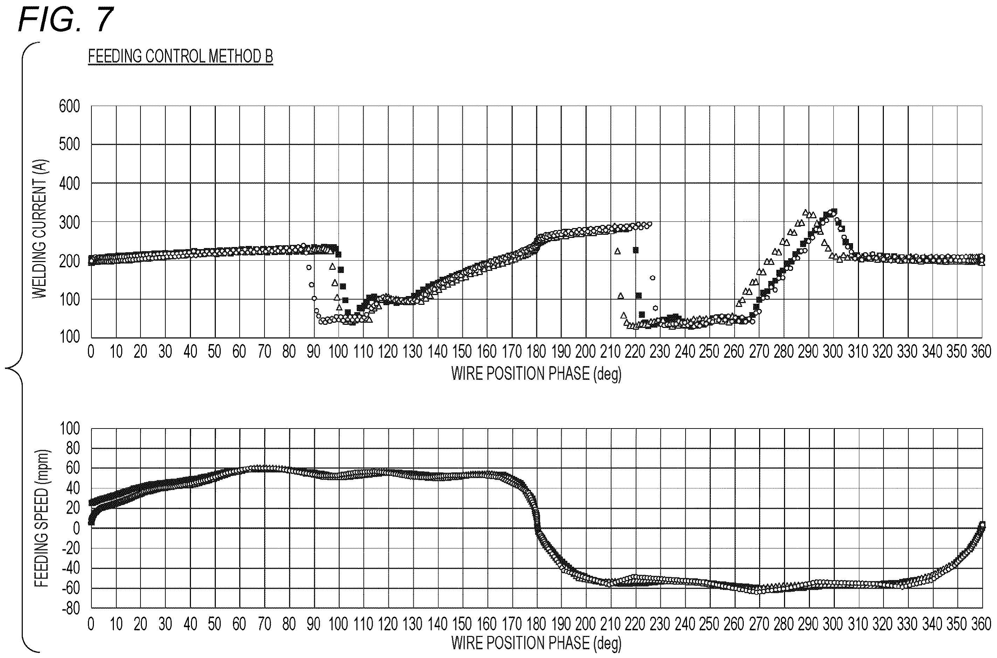

FIG. 6 is a graph of a welding current and a feeding speed when a feeding control method A is used as a welding method. FIG. 7 is a graph of a welding current and a feeding speed when a feeding control method B is used as the welding method. In either graph, a horizontal axis indicates a wire position phase. A vertical axis indicates a welding current in ampere (A), and a feeding speed in m/min (mpm).

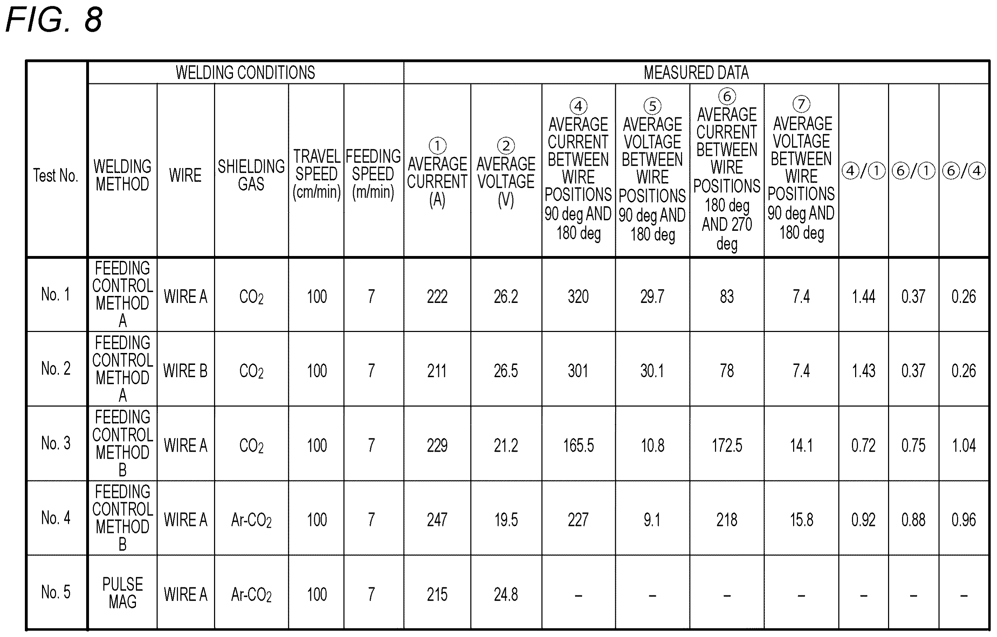

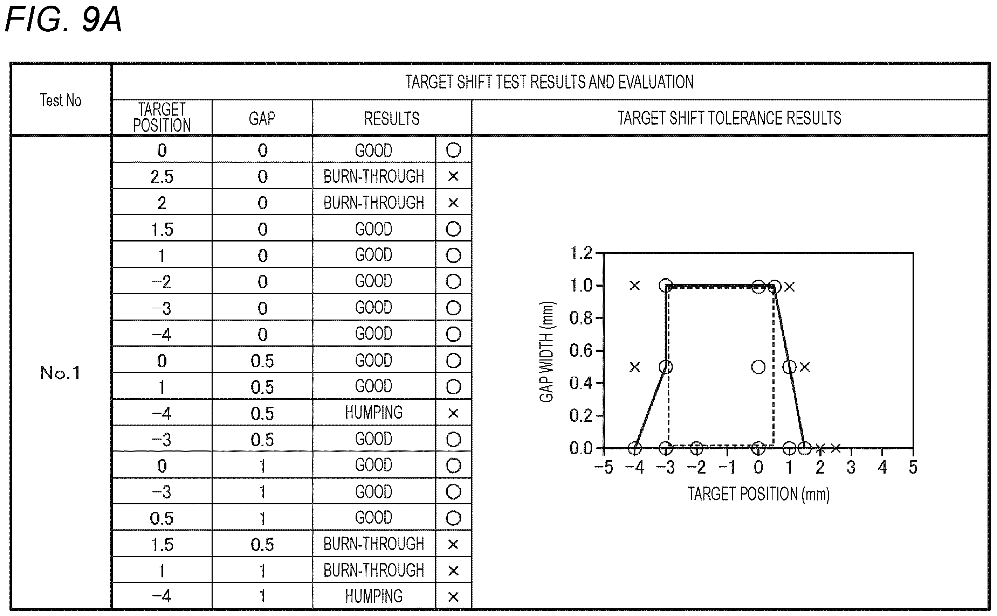

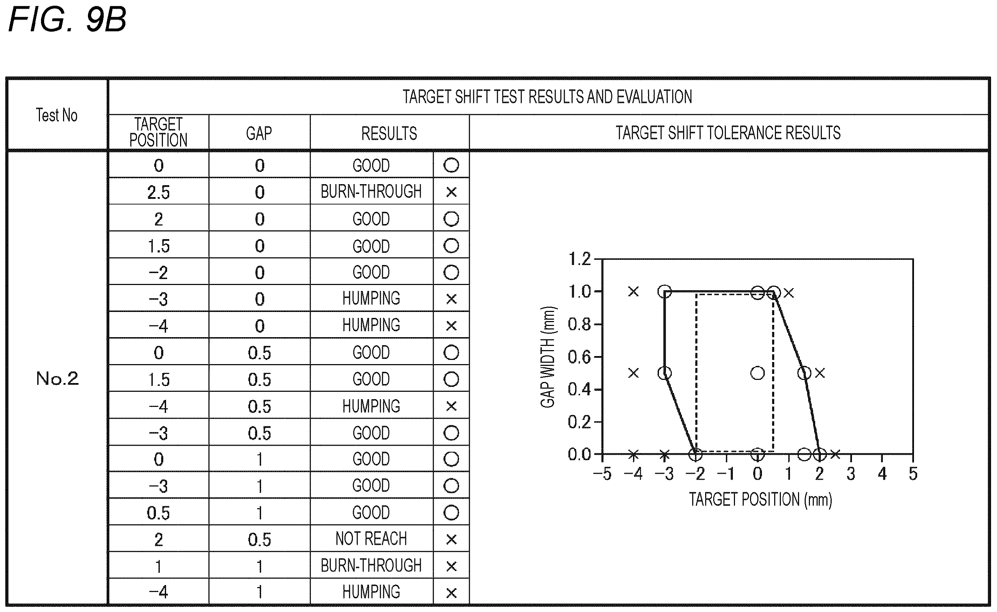

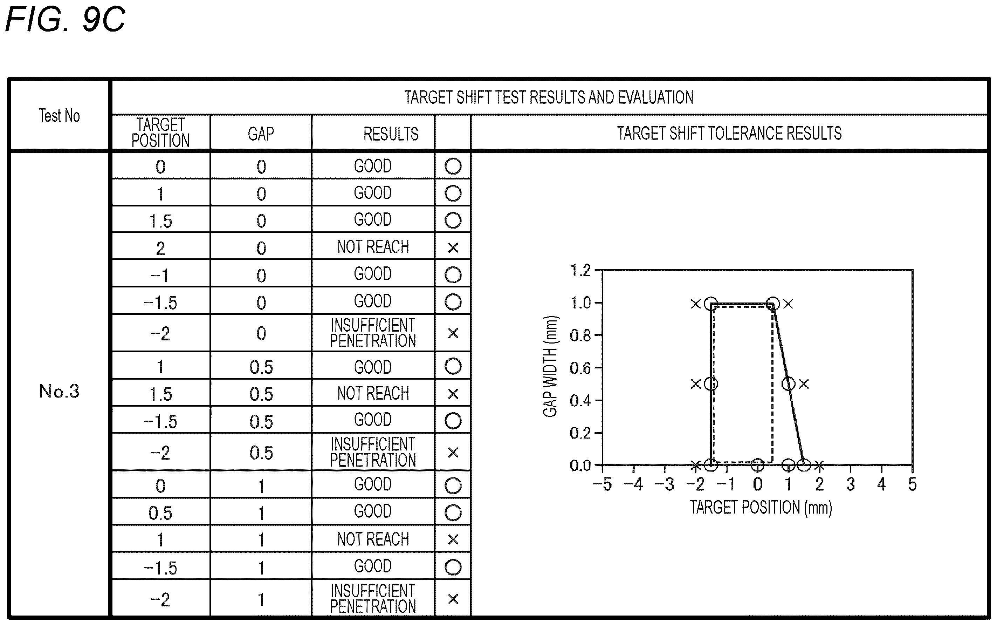

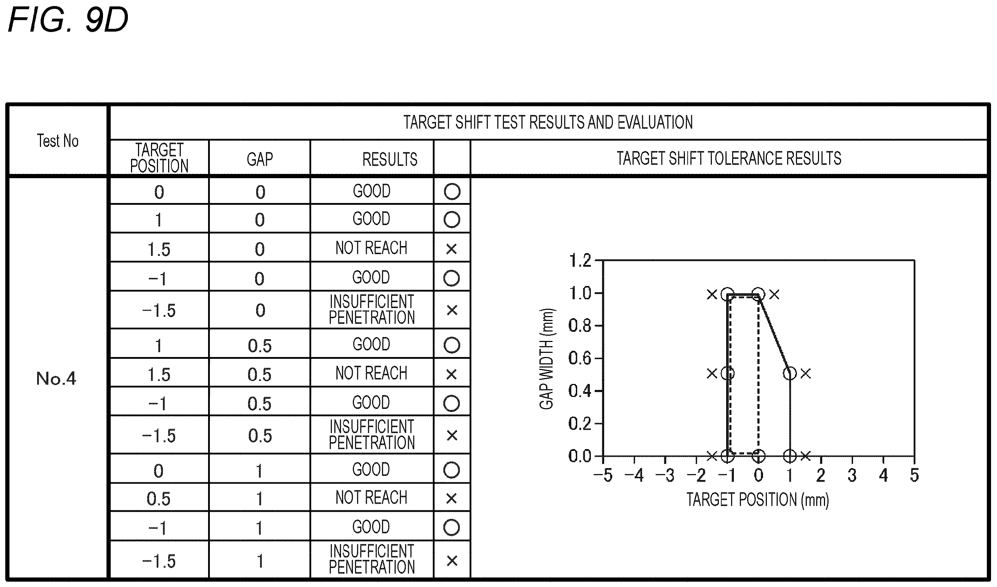

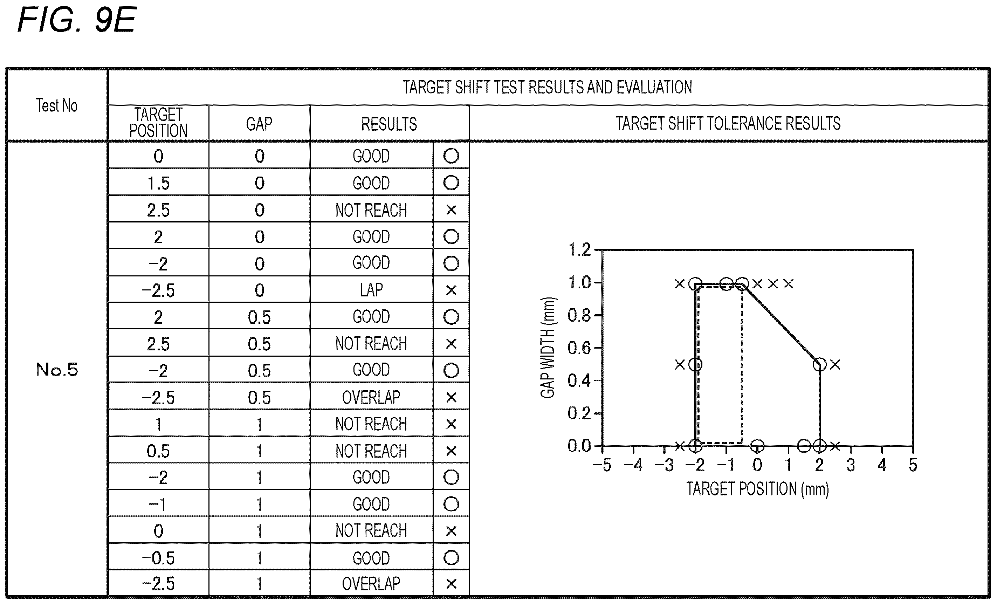

FIG. 8 is a diagram illustrating welding conditions and measured data when pulse MAG welding is used in each of the feeding control method A, the feeding control method B, and a comparative example. FIGS. 9A to 9E are diagrams illustrating target shift test results based on the welding conditions and the measured data illustrated in FIG. 8.

First, the welding conditions will be described. Test Nos. 1 and 2 use the feeding control method A. Test Nos. 3 and 4 use the feeding control method B. Test No. 5 uses the pulsed MAG welding. Regarding the type of wire, the wire B is used in Test No. 2, and the wire A is used in Test Nos. 1 and 3 to 5. The shielding gas used for Test Nos. 1 to 3 was 100% by volume of $CO_2$ gas (Referred to as $CO_2$ in FIG. 8 and hereinafter.), and the shielding gas used for Test Nos. 4 and 5 was 80% by volume of Ar + 20% by volume of $CO_2$ gas (Referred to as Ar-$CO_2$ in FIG. 8 and hereinafter.). The travel speed was 100 cm/min in all tests. The feeding speed was 7 m/min in all tests.

Next, the measured data will be described. Values of the average current and the average voltage for each test number were illustrated in FIG. 8. For Test Nos. 1 to 4, values of an average current in a predetermined period and an average voltage in the predetermined period were illustrated in FIG. 8. In addition, for Test Nos. 1 to 4, ratios of the average currents were also calculated based on the above-mentioned measured values, and are illustrated in FIG. 8.

As illustrated in FIGS. 9A to 9E, trials were performed at a plurality of target positions for each test number. FIGS. 9A to 9E indicate a value of a gap width and a value of a target position (shift amount of the target position) at that time, and whether a welding result is good (in FIGS. 9A to 9E, a case of the good welding result indicates by a circle mark) or poor (in FIGS. 9A to 9E, a case of the poor welding result indicates by a cross mark) as a test result. The target position (shift amount of the target position) is a shift amount when a value of 0 is set as a normal target position in a case in which a vertical direction of a welding line is set as an axis. When the target position is a negative value (-1 to -5), it indicates that there is a shift in a direction of an upper plate, and when the target position is a positive value (1 to 5), it indicates that there is a shift in a direction opposite to the above-described direction.

Further, the round marks (∘) and cross marks (×) of the test results were plotted on a target shift tolerance graph. A horizontal axis of the target shift tolerance graph represents a target position (mm), and a vertical axis represents a gap width (mm). In the target shift tolerance graph, an allowable range is indicated by a broken line. The allowable range is indicated as a rectangle that falls within a region formed by connecting the plotted points at which the test results are ∘. It can be said that the larger an area of the broken line region, the higher the robustness. This is because, as described above, as the shift of the target position of welding or the gap becomes larger, the problems such as the poor bead shape and the poor cross-linking property become more remarkable, and the fact that the inside of the broken line region has a high appearance of obtaining good welding results and the area of the broken line region is large indicates that the good welding results can be obtained even when the target position is largely shifted or the gap width is large.

It can be seen from FIGS. 9A to 9E that the area of the broken line region is larger and the robustness is higher in the case of the feeding control method A than in the case of the feeding control method B. In addition, it can be seen that when the same feeding control method A is used, the area of the broken line region is larger and the robustness is higher when the wire A is used than when the wire B is used.

The present invention is not limited to the embodiments described above, and combinations of the respective configurations of the embodiments and changes and applications made by those skilled in the art based on the description of the specification and well-known techniques are also intended for the present invention and are included in the scope of protection.

As described above, the present description discloses the following matters.

(1) A fillet welding method to which a feeding control method for alternately switching a feeding speed between a forward feeding period and a reverse feeding period is applied, in which

in the feeding control method,
when a wire position phase based on a position of a welding wire at the time of switching from the reverse feeding period to the forward feeding period is set to 0 deg,
an average value $I_{90 \deg to 180 \deg\_ave}$ of welding currents in a period $T_{90 \deg to 180 \deg}$ during which the wire position phase is 90 deg to 180 deg is larger than a set welding current value $I_{set}$, and
an average value $I_{180 \deg to 270 \deg\_ave}$ of welding currents in a period $T_{180 \deg to 270 \deg}$ during which the wire position phase is 180 deg to 270 deg is smaller than the set welding current value $I_{set}$.

According to the fillet welding method, excellent robustness can be achieved even when a feeding control welding method is applied.

(2) The fillet welding method according to (1), in which
the feeding control method includes:

setting a wire frequency when the forward feeding period and the reverse feeding period are set as one cycle to a predetermined value, and
switching at least the welding current between a current inhibition period and a current non-inhibition period according to the wire position phase or a feeding speed phase.

According to the fillet welding method, the excellent robustness can be achieved even in a case of a short-circuit inhibition type feeding control method.

(3) The fillet welding method according to (1), in which a ratio $(I_{90 \deg to 180 \deg\_ave})/(I_{set})$ of the average value $I_{90 \deg to 180 \deg\_ave}$ of the welding currents in the period $T_{90 \deg to 180 \deg}$ during which the wire position phase is 90 deg to 180 deg to the set welding current value $I_{set}$ is 1.10 or more.

According to the fillet welding method, it is possible to achieve greater penetration and wider bead width.

(4) The fillet welding method according to (1), in which a ratio $(I_{180 \deg to 270 \deg\_ave})/(I_{set})$ of the average value $I_{180 \deg to 270 \deg\_ave}$ of the welding currents in the period $T_{180 \deg to 270 \deg}$ during which the wire position phase is 180 deg to 270 deg to the set welding current value $I_{set}$ is 0.90 or less.

According to the fillet welding method, it is possible to achieve greater penetration and wider bead width.

(5) The fillet welding method according to (1), in which a ratio $(I_{180 \deg to 270 \deg\_ave})/(I_{90 \deg to 180 \deg\_ave})$ of the average value $I_{180 \deg to 270 \deg\_ave}$ of the welding currents in the period $T_{180 \deg to 270 \deg}$ during which the wire position phase is 180 deg to 270 deg to the average value $I_{90 \deg to 180 \deg\_ave}$ of the welding currents in the period $T_{90 \deg to 180 \deg}$ during which the wire position phase is 90 deg to 180 deg is 0.5 or less.

According to the fillet welding method, large robustness can be ensured.

(6) The fillet welding method according to any one of (1) to (5), in which
the welding wire contains O: 0.0010 mass % to 0.0100 mass %, further contains at least one of Ti, Al, Mg, and Zr, and contains 0.001 mass % to 0.450 mass % in total of Ti, Al, Mg, and Zr with respect to a total mass of the welding wire.

According to the fillet welding method, by forming an oxide film on a droplet surface at the time of forming a droplet at a tip of the welding wire, the feeding speed is locally changed depending on a wire position, and a shape of the droplet is less likely to be changed even when an inertial force is applied to the droplet, and thus it is possible to prevent the swinging of the droplet or the droplet detachment at an unintended wire position.

(7) The fillet welding method according to (6), in which Si contained in the welding wire is 0.50 mass % or less with respect to the total mass of the welding wire, and a value of C + Si/24 + Mn/6 + Ni/40 + Cr/5 + Mo/4 + V/4 + Cu/13 is 0.35 to 1.40.

According to the fillet welding method, by limiting the content of Si to 0.50 mass % or less, an increase in viscosity of the molten pool can be prevented, resulting in good robustness. Furthermore, compositions of the slag formed on the weld bead change, resulting in thin slag with good adhesion on which an electrodeposition coating film can be formed. In addition, it is necessary to compensate for the mechanical properties by using other elements to compensate for the reduced content of Si, and when the MIX value is within the above-described range, it is possible to achieve a balance with the other elements.

(8) The fillet welding method according to (7), in which

the welding wire contains Ti: 0.030 mass % to 0.250 mass %, and Al: 0.001 mass % to 0.300 mass % with respect to the total mass of the welding wire, and
a ratio of Ti/Al is 0.3 to 20.

According to the fillet welding method, the melting points of oxides of Ti and Al are 2100°C or below, and as compared with Mg and Zr, the oxide film does not become thicker and is less likely to be formed in the vicinity of a boundary between the droplet and the wire, and thus a necking occurs at the boundary between the wire and the droplet, and the droplet is detached in a latter half during reverse feeding of the wire. This effect is enhanced by the ratio of Ti/Al being 0.3 to 20.

(9) The fillet welding method according to (6), in which

the feeding speed during reverse feeding when the wire position phase is 270 deg is 50 m/min or more, and
a value of an expression (Ti + Al)/(Ti + Al + Mg + Zr) obtained by contents of Ti, Al, Mg, and Zr contained in the welding wire is 0.5 or more.

According to the fillet welding method, when a maximum feeding speed during reverse feeding is set to 50 m/min or higher, the wire can be stably detached by an inertial force in the latter half during reverse feeding of the wire. In addition, when Al and Ti are contained and the oxide film is controlled, it is possible to prevent the swinging or the detachment of the droplet in a latter half during forward feeding (90 deg to 180 deg) and to promote the detachment of the droplet in the latter half during reverse feeding.

(10) A feeding control method for alternately switching a feeding speed between a forward feeding period and a reverse feeding period, the feeding control method being applied to a fillet welding method, in which

when a wire position phase based on a position of a welding wire at the time of switching from the reverse feeding period to the forward feeding period is set to 0 deg,
an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and
an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

According to the feeding control method, the excellent robustness can be achieved even when the feeding control method is applied to fillet welding.

(11) A power supply having a function of performing feeding control for alternately switching a feeding speed between a forward feeding period and a reverse feeding period, the power supply being applied to a fillet welding method, in which

in the feeding control,
when a wire position phase based on a position of a welding wire at the time of switching from the reverse feeding period to the forward feeding period is set to 0 deg,
an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and
an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

According to the power supply, the excellent robustness can be achieved even when the feeding control welding method in which the power supply performs the feeding control is applied to fillet welding.

(12) A fillet welding system to which a feeding control method for alternately switching a feeding speed between a forward feeding period and a reverse feeding period is applied, in which

in the feeding control method,

when a wire position phase based on a position of a welding wire at the time of switching from the reverse feeding period to the forward feeding period is set to 0 deg,

an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and

an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

According to the fillet welding system, the excellent robustness can be achieved even when the feeding control welding method is applied.

Although various embodiments are described above, it is needless to say that the present invention is not limited to these embodiments. It is apparent that those skilled in the art can conceive of various modifications and alterations within the scope described in the claims, and it is understood that such modifications and alterations naturally fall within the technical scope of the present invention. In addition, the respective constituent elements in the above-described embodiments may be freely combined without departing from the gist of the invention.

The present application is based on a Japanese Patent Application (Patent Application No. 2023-059087) filed on March 31, 2023, contents of which are incorporated herein by reference.

REFERENCE SIGNS LIST

1: alternating-current power supply
2: primary-side rectifier
3: smoothing capacitor
4: switching element
5: transformer
6: secondary-side rectifier
7: reactor
30: inverter drive unit
31: current detection unit
32: voltage detection unit
33: detachment detection unit
34: current error amplification unit
35: feed setting data unit
36: current setting unit
36A: target current setting unit
36B: wire tip position conversion unit
36C: voltage setting unit
37: waveform control table linear calculation unit
38: phase delay correction unit
39: push feeder control unit
40: A/D input unit
41: electrical angle adjustment unit
42: digital communication unit
50: welding system
100: welding wire
110: welding robot
111: welding torch
120: welding control device
122: digital communication unit
123: digital communication unit
140: welding power supply
141: control system portion
150: controller
160: servo amplifier
161: forward and reverse feeding command generating unit
162: digital communication unit
163: synchronization signal generating unit

170: servo motor
180: push motor
190: wire buffer
191: serial analog conversion unit
200: workpiece

**Claims**

1. A fillet welding method to which a feeding control method for alternately switching a feeding speed between a forward feeding period and a reverse feeding period is applied, wherein

   in the feeding control method,
   when a wire position phase based on a position of a welding wire at the time of switching from the reverse feeding period to the forward feeding period is set to 0 deg,
   an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and
   an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

2. The fillet welding method according to claim 1, wherein
   the feeding control method includes:

   setting a wire frequency when the forward feeding period and the reverse feeding period are set as one cycle to a predetermined value, and
   switching at least the welding current between a current inhibition period and a current non-inhibition period according to the wire position phase or a feeding speed phase.

3. The fillet welding method according to claim 1, wherein
   a ratio $(I_{90\,deg\,to\,180\,deg\,ave})/(I_{set})$ of the average value $I_{90\,deg\,to\,180\,deg\_ave}$ of the welding currents in the period $T_{90\,deg\,to\,180\,deg}$ during which the wire position phase is 90 deg to 180 deg to the set welding current value $I_{set}$ is 1.10 or more.

4. The fillet welding method according to claim 1, wherein
   a ratio $(I_{180\,deg\,to\,270\,deg\_ave})/(I_{set})$ of the average value $I_{180\,deg\,to\,270\,deg\_ave}$ of the welding currents in the period $T_{180\,deg\,to\,270\,deg}$ during which the wire position phase is 180 deg to 270 deg to the set welding current value $I_{set}$ is 0.90 or less.

5. The fillet welding method according to claim 1, wherein
   a ratio $(I_{180\,deg\,to\,270\,deg\_ave})/(I_{90\,deg\,to\,180\,deg\_ave})$ of the average value $I_{180\,deg\,to\,270\,deg\_ave}$ of the welding currents in the period $T_{180\,deg\,to\,270\,deg}$ during which the wire position phase is 180 deg to 270 deg to the average value $I_{90\,deg\,to\,180\,deg\_ave}$ of the welding currents in the period $T_{90\,deg\,to\,180\,deg}$ during which the wire position phase is 90 deg to 180 deg is 0.5 or less.

6. The fillet welding method according to any one of claims 1 to 5, wherein
   the welding wire contains O: 0.0010 mass % to 0.0100 mass %, further contains at least one of Ti, Al, Mg, and Zr, and contains 0.001 mass % to 0.450 mass % in total of Ti, Al, Mg, and Zr with respect to a total mass of the welding wire.

7. The fillet welding method according to claim 6, wherein

   Si contained in the welding wire is 0.50 mass % or less with respect to the total mass of the welding wire, and
   a value of C + Si/24 + Mn/6 + Ni/40 + Cr/5 + Mo/4 + V/4 + Cu/13 is 0.35 to 1.40.

8. The fillet welding method according to claim 7, wherein

   the welding wire contains Ti: 0.030 mass % to 0.250 mass %, and Al: 0.001 mass % to 0.300 mass % with respect to the total mass of the welding wire, and
   a ratio of Ti/Al is 0.3 to 20.

9. The fillet welding method according to claim 6, wherein

   the feeding speed during reverse feeding when the wire position phase is 270 deg is 50 m/min or more, and a value of an expression (Ti + Al)/(Ti + Al + Mg + Zr) obtained by contents of Ti, Al, Mg, and Zr contained in the welding wire is 0.5 or more.

10. A feeding control method for alternately switching a feeding speed between a forward feeding period and a reverse feeding period, the feeding control method being applied to a fillet welding method, wherein

    when a wire position phase based on a position of a welding wire at the time of switching from the reverse feeding period to the forward feeding period is set to 0 deg,
    an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and
    an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

11. A power supply having a function of performing feeding control for alternately switching a feeding speed between a forward feeding period and a reverse feeding period, the power supply being applied to a fillet welding method, wherein

    in the feeding control,
    when a wire position phase based on a position of a welding wire at the time of switching from the reverse feeding period to the forward feeding period is set to 0 deg,
    an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and
    an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

12. A fillet welding system to which a feeding control method for alternately switching a feeding speed between a forward feeding period and a reverse feeding period is applied, wherein

    in the feeding control method,
    when a wire position phase based on a position of a welding wire at the time of switching from the reverse feeding period to the forward feeding period is set to 0 deg,
    an average value $I_{90\,deg\,to\,180\,deg\_ave}$ of welding currents in a period $T_{90\,deg\,to\,180\,deg}$ during which the wire position phase is 90 deg to 180 deg is larger than a set welding current value $I_{set}$, and
    an average value $I_{180\,deg\,to\,270\,deg\_ave}$ of welding currents in a period $T_{180\,deg\,to\,270\,deg}$ during which the wire position phase is 180 deg to 270 deg is smaller than the set welding current value $I_{set}$.

FIG. 1

FIG. 2

EP 4 674 555 A1

# FIG. 3

*FIG. 4*

| | C | Si | Mn | P | S | Ti | Al | Cu | Ni | Cr | Mo | V | O | N |
|---|---|---|---|---|---|---|---|---|---|---|---|---|---|---|
| WIRE A | 0.05 | 0.11 | 1.97 | 0.012 | 0.004 | 0.18 | 0.014 | 0.22 | 0 | 0 | 0 | 0 | 0.0028 | 0.0032 |
| WIRE B | 0.1 | 0.86 | 1.56 | 0.012 | 0.015 | 0.001 | 0.002 | 0.24 | 0.01 | 0.05 | 0.01 | 0.001 | 0.003 | 0.0035 |

| | $C+Si/24+Mn/6+Ni/40+Cr/5+Mo/4+V/4+Cu/13$ | Ti/Al | Ti+Al+Mg+Zr | Ti+Al+Mg+Zr/O |
|---|---|---|---|---|
| WIRE A | 0.40 | 12.9 | 0.194 | 69.3 |
| WIRE B | 0.43 | 0.5 | 0.003 | 1.0 |

## FIG. 5

| WELDING METHOD | FEEDING CONTROL TYPE | WIRE FREQUENCY | WIRE AMPLITUDE (WAVE HEIGHT) | SWITCHING TIMING OF CURRENT CONTROL | WIRE POSITION FOR PEAK CURRENT SWITCHING | WIRE POSITION FOR BASE CURRENT SWITCHING |
|---|---|---|---|---|---|---|
| FEEDING CONTROL METHOD A | SHORT-CIRCUIT INHIBITION TYPE | 70Hz | 5mm (AMPLITUDE OF ±2.5 mm) | WHEN WIRE POSITION IS FIXED | 157deg | 350deg |
| FEEDING CONTROL METHOD B | SHORT-CIRCUIT TYPE | VARIATION (IN ACCORDANCE WITH SHORT-CIRCUIT CYCLE) | VARIATION | DURING SHORT CIRCUIT | – | – |
| PULSE MAG | – | – | – | – | – | – |

## FIG. 6

FEEDING CONTROL METHOD A

PEAK CURRENT SWITCHING
(157 deg)

BASE CURRENT SWITCHING
(350 deg)

EP 4 674 555 A1

FIG. 7

FEEDING CONTROL METHOD B

# FIG. 8

EP 4 674 555 A1

| Test No. | WELDING CONDITIONS | | | | | MEASURED DATA | | | | | | | | |
|---|---|---|---|---|---|---|---|---|---|---|---|---|---|---|
| | WELDING METHOD | WIRE | SHIELDING GAS | TRAVEL SPEED (cm/min) | FEEDING SPEED (m/min) | ① AVERAGE CURRENT (A) | ② AVERAGE VOLTAGE (V) | ④ AVERAGE CURRENT BETWEEN WIRE POSITIONS 90 deg AND 180 deg | ⑤ AVERAGE VOLTAGE BETWEEN WIRE POSITIONS 90 deg AND 180 deg | ⑥ AVERAGE CURRENT BETWEEN WIRE POSITIONS 180 deg AND 270 deg | ⑦ AVERAGE VOLTAGE BETWEEN WIRE POSITIONS 90 deg AND 180 deg | ④/① | ⑥/① | ⑥/④ |
| No. 1 | FEEDING CONTROL METHOD A | WIRE A | $CO_2$ | 100 | 7 | 222 | 26.2 | 320 | 29.7 | 83 | 7.4 | 1.44 | 0.37 | 0.26 |
| No. 2 | FEEDING CONTROL METHOD A | WIRE B | $CO_2$ | 100 | 7 | 211 | 26.5 | 301 | 30.1 | 78 | 7.4 | 1.43 | 0.37 | 0.26 |
| No. 3 | FEEDING CONTROL METHOD B | WIRE A | $CO_2$ | 100 | 7 | 229 | 21.2 | 165.5 | 10.8 | 172.5 | 14.1 | 0.72 | 0.75 | 1.04 |
| No. 4 | FEEDING CONTROL METHOD B | WIRE A | $Ar-CO_2$ | 100 | 7 | 247 | 19.5 | 227 | 9.1 | 218 | 15.8 | 0.92 | 0.88 | 0.96 |
| No. 5 | PULSE MAG | WIRE A | $Ar-CO_2$ | 100 | 7 | 215 | 24.8 | – | – | – | – | – | – | – |

# FIG. 9A

| Test No | TARGET SHIFT TEST RESULTS AND EVALUATION | | | | |
|---------|------------------|-----|---------|---|----------------------------|
| | TARGET POSITION | GAP | RESULTS | | TARGET SHIFT TOLERANCE RESULTS |
| No.1 | 0 | 0 | GOOD | ○ | |
| | 2.5 | 0 | BURN-THROUGH | × | |
| | 2 | 0 | BURN-THROUGH | × | |
| | 1.5 | 0 | GOOD | ○ | |
| | 1 | 0 | GOOD | ○ | |
| | −2 | 0 | GOOD | ○ | |
| | −3 | 0 | GOOD | ○ | |
| | −4 | 0 | GOOD | ○ | |
| | 0 | 0.5 | GOOD | ○ | |
| | 1 | 0.5 | GOOD | ○ | |
| | −4 | 0.5 | HUMPING | × | |
| | −3 | 0.5 | GOOD | ○ | |
| | 0 | 1 | GOOD | ○ | |
| | −3 | 1 | GOOD | ○ | |
| | 0.5 | 1 | GOOD | ○ | |
| | 1.5 | 0.5 | BURN-THROUGH | × | |
| | 1 | 1 | BURN-THROUGH | × | |
| | −4 | 1 | HUMPING | × | |

EP 4 674 555 A1

## FIG. 9B

| Test No | TARGET SHIFT TEST RESULTS AND EVALUATION | | | | |
| | TARGET POSITION | GAP | RESULTS | | TARGET SHIFT TOLERANCE RESULTS |
| --- | --- | --- | --- | --- | --- |
| | 0 | 0 | GOOD | ○ | |
| | 2.5 | 0 | BURN-THROUGH | × | |
| | 2 | 0 | GOOD | ○ | |
| | 1.5 | 0 | GOOD | ○ | |
| | −2 | 0 | GOOD | ○ | |
| | −3 | 0 | HUMPING | × | |
| | −4 | 0 | HUMPING | × | |
| | 0 | 0.5 | GOOD | ○ | |
| No.2 | 1.5 | 0.5 | GOOD | ○ | |
| | −4 | 0.5 | HUMPING | × | |
| | −3 | 0.5 | GOOD | ○ | |
| | 0 | 1 | GOOD | ○ | |
| | −3 | 1 | GOOD | ○ | |
| | 0.5 | 1 | GOOD | ○ | |
| | 2 | 0.5 | NOT REACH | × | |
| | 1 | 1 | BURN-THROUGH | × | |
| | −4 | 1 | HUMPING | × | |

EP 4 674 555 A1

# FIG. 9C

| Test No | TARGET SHIFT TEST RESULTS AND EVALUATION | | | | |
| --- | --- | --- | --- | --- | --- |
| | TARGET POSITION | GAP | RESULTS | | TARGET SHIFT TOLERANCE RESULTS |
| No.3 | 0 | 0 | GOOD | ○ | |
| | 1 | 0 | GOOD | ○ | |
| | 1.5 | 0 | GOOD | ○ | |
| | 2 | 0 | NOT REACH | × | |
| | −1 | 0 | GOOD | ○ | |
| | −1.5 | 0 | GOOD | ○ | |
| | −2 | 0 | INSUFFICIENT PENETRATION | × | |
| | 1 | 0.5 | GOOD | ○ | |
| | 1.5 | 0.5 | NOT REACH | × | |
| | −1.5 | 0.5 | GOOD | ○ | |
| | −2 | 0.5 | INSUFFICIENT PENETRATION | × | |
| | 0 | 1 | GOOD | ○ | |
| | 0.5 | 1 | GOOD | ○ | |
| | 1 | 1 | NOT REACH | × | |
| | −1.5 | 1 | GOOD | ○ | |
| | −2 | 1 | INSUFFICIENT PENETRATION | × | |

EP 4 674 555 A1

# FIG. 9D

| Test No | TARGET SHIFT TEST RESULTS AND EVALUATION | | | | |
|---|---|---|---|---|---|
| | TARGET POSITION | GAP | RESULTS | | TARGET SHIFT TOLERANCE RESULTS |
| No.4 | 0 | 0 | GOOD | ○ | |
| | 1 | 0 | GOOD | ○ | |
| | 1.5 | 0 | NOT REACH | × | |
| | −1 | 0 | GOOD | ○ | |
| | −1.5 | 0 | INSUFFICIENT PENETRATION | × | |
| | 1 | 0.5 | GOOD | ○ | |
| | 1.5 | 0.5 | NOT REACH | × | |
| | −1 | 0.5 | GOOD | ○ | |
| | −1.5 | 0.5 | INSUFFICIENT PENETRATION | × | |
| | 0 | 1 | GOOD | ○ | |
| | 0.5 | 1 | NOT REACH | × | |
| | −1 | 1 | GOOD | ○ | |
| | −1.5 | 1 | INSUFFICIENT PENETRATION | × | |

EP 4 674 555 A1

## FIG. 9E

EP 4 674 555 A1

| Test No | TARGET SHIFT TEST RESULTS AND EVALUATION | | | | |
|---------|------------------------------------------|---|---|---|---|
| | TARGET POSITION | GAP | RESULTS | | TARGET SHIFT TOLERANCE RESULTS |
| No.5 | 0 | 0 | GOOD | ○ | |
| | 1.5 | 0 | GOOD | ○ | |
| | 2.5 | 0 | NOT REACH | × | |
| | 2 | 0 | GOOD | ○ | |
| | −2 | 0 | GOOD | ○ | |
| | −2.5 | 0 | LAP | × | |
| | 2 | 0.5 | GOOD | ○ | |
| | 2.5 | 0.5 | NOT REACH | × | |
| | −2 | 0.5 | GOOD | ○ | |
| | −2.5 | 0.5 | OVERLAP | × | |
| | 1 | 1 | NOT REACH | × | |
| | 0.5 | 1 | NOT REACH | × | |
| | −2 | 1 | GOOD | ○ | |
| | −1 | 1 | GOOD | ○ | |
| | 0 | 1 | NOT REACH | × | |
| | −0.5 | 1 | GOOD | ○ | |
| | −2.5 | 1 | OVERLAP | × | |

## INTERNATIONAL SEARCH REPORT

| International application No. |
| --- |
| **PCT/JP2024/005287** |

| A. | CLASSIFICATION OF SUBJECT MATTER |
| --- | --- |

*B23K 9/12*(2006.01)i; *B23K 9/02*(2006.01)i; *B23K 9/23*(2006.01)i; *B23K 35/30*(2006.01)i
FI:    B23K9/12 305; B23K9/02 D; B23K9/12 301Q; B23K9/23 A; B23K35/30 320A

According to International Patent Classification (IPC) or to both national classification and IPC

| B. | FIELDS SEARCHED |
| --- | --- |

Minimum documentation searched (classification system followed by classification symbols)

B23K9/12; B23K9/02; B23K9/23; B23K35/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2016-153129 A (MAZDA MOTOR CORPORATION) 25 August 2016 (2016-08-25) paragraphs [0021]-[0028], fig. 1-3 | 1-5, 10-12 |
| Y | | 6 |
| Y | JP 2012-011429 A (KABUSHIKI KAISHA KOBE SEIKO SHO) 19 January 2012 (2012-01-19) paragraphs [0069]-[0087], table 3, fig. 4 | 6 |
| A | JP 2014-163587 A (KABUSHIKI KAISHA TOSHIBA) 08 September 2014 (2014-09-08) entire text, all drawings | 1-12 |
| A | JP 2019-526453 A (FRONIUS INTERNATIONAL GMBH) 19 September 2019 (2019-09-19) entire text, all drawings | 1-12 |
| A | WO 2014/073184 A1 (PANASONIC CORPORATION) 15 May 2014 (2014-05-15) entire text, all drawings | 1-12 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 April 2024** | **23 April 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

### INTERNATIONAL SEARCH REPORT
**Information on patent family members**

International application No.

**PCT/JP2024/005287**

| Patent document cited in search report | | | Publication date (day/month/year) | Patent family member(s) | | Publication date (day/month/year) |
|---|---|---|---|---|---|---|
| JP | 2016-153129 | A | 25 August 2016 | (Family: none) | | |
| JP | 2012-011429 | A | 19 January 2012 | US 2012/0003035 A1 paragraphs [0097]-[0113], table 3, fig. 4 CN 102310254 A KR 10-2012-0002935 A | | |
| JP | 2014-163587 | A | 08 September 2014 | US 2015/0176926 A1 entire text, all drawings | | |
| JP | 2019-526453 | A | 19 September 2019 | US 2019/0240758 A1 entire text, all drawings CN 109641298 A KR 10-2019-0040363 A | | |
| WO | 2014/073184 | A1 | 15 May 2014 | US 2015/0096966 A1 entire text, all drawings CN 104582888 A | | |

Form PCT/ISA/210 (patent family annex) (July 2022)

**EP 4 674 555 A1**

**Patent documents cited in the description**

- JP 2012170970 A

- JP 2001321946 A